# EUROPÄISCHE PATENTANMELDUNG

(11) **EP 2 644 911 A2**
(43) Veröffentlichungstag der Anmeldung: **02.10.2013**
(21) Anmeldenummer: 13160114.8
(22) Anmeldetag: 20.03.2013
(51) Int. Cl.: F16B 37/06

(54) **Funktionselement in Form eines Einpresselements**

(30) Priorität: 27.03.2012 DE 102012006221
(71) Anmelder: Profil Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(57) **Zusammenfassung**

Die vorliegende Erfindung betrifft ein Funktionselement in Form eines Einpresselements zur Befestigung an ein Blechteil (12, 12'), wobei das Funktionselement einen Kopfteil (14) und einen Schaftteil (16) aufweist, der Kopfteil auf der dem Schaftteil zugewandten Seite (18) eine ringförmige Blechanlagefläche (20) und innerhalb dieser ringförmigen Blechanlagefläche eine ringförmige axiale Vertiefung (22) aufweist, die am Übergang des Kopfteils (14) in den Schafttei (16)l diesen umgibt. Erfindungsgemäß weist der Schaftteil (16) mehrere umfangsmäßig verteilte, sich in axialer Richtung erstreckende radiale Vertiefungen (24) und dazwischen ebenfalls axial erstreckende und radial hervorstehende Nasen (26) auf, wobei an den Stellen der radialen Vertiefungen, an deren dem Kopfteil zugewandten axialen Enden Materialerhöhungen (30) vorliegen, die im Bereich der ringförmigen Vertiefung (22) mit dem Kopfteil Hinterschneidungen (32) bilden. Ferner sind sich radial erstreckende Verdrehsicherungsrippen (43) im Bodenbereich der ringförmigen Vertiefung (22) vorgesehen.

## Beschreibung

Die vorliegende Erfindung betrifft ein Funktionselement in Form eines Einpresselements zur Anbringung an ein Blechteil. Dabei kann das Funktionselement entweder als männliches Element oder als weibliches Element ausgebildet werden. Als männliches Element kommt ein Bolzenelement in Frage, dessen Schaftteil mit einem Gewinde versehen ist, oder ein Element, dessen Schaftteil mit einer Aufnahme für einen Clip oder dergleichen ausgebildet ist, oder ein Element, dessen Schaftteil zylindrisch ausgeführt ist und als Lagerung für ein auf dem Element drehbares Teil dient.

Bei einem weiblichen Element kommt vornehmlich ein Mutterelement in Frage, d.h. ein Element mit einem Innengewinde, wobei der Schaftteil als Stanzabschnitt ausgebildet werden kann, so dass ein selbststanzendes Mutterelement vorliegt. Das Gewinde muss nicht vorgefertigt sein, sondern könnte nach der Anbringung des Mutterelements an ein Blechteil mittels einer gewindeformenden oder -schneidenden Schraube erzeugt werden. Das weibliche Element kann aber auch ein hohles Element mit einem zylindrischen Hohlraum sein, der zur drehbaren Lagerung einer Welle dient.

Funktionselemente sind in den verschiedensten Ausführungen im Stand der Technik bekannt. Einerseits gibt es so genannte Nietelemente, die einen Nietabschnitt aufweisen, der bei der Anbringung an ein Blechteil verformt wird, um ein Nietbördel auszubilden, das mit dem Kopfteil eine ringförmige Aufnahme zur Aufnahme des Randes eines Loches im Blechteil bildet. Bei solchen Nietelementen wird also das Funktionselement bei der Anbringung an das Blechteil verformt. Typische Beispiele für solche Nietelemente sind die NBR-Bolzenelemente der vorliegenden Anmelderin bzw. die RND-Mutterelemente der vorliegenden Anmelderin (europäisches Patent 1116891). Ferner sind so genannte Einpresselemente bestens bekannt, bei denen das Element selbst bei der Anbringung an ein Blechteil nicht absichtlich verformt wird, sondern das Blechmaterial selbst wird verformt, um dieses in Eingriff mit Hinterschneidungen des jeweiligen Einpresselements zu bringen. Auch hier sind verschiedene Bolzenelemente und Mutterelemente bekannt.

Als Bolzenelemente können die so genannten EBF-Bolzen der vorliegenden Anmelderin (europäisches Patent 678679) und als Mutterelement die so genannten RSU-Elemente (europäisches Patent 759510) der vorliegenden Anmelderin genannt werden.

Die Aufgabe der vorliegenden Erfindung ist es, ein Funktionselement in Form eines Einpresselements zur Verfügung zu stellen, das eine Alternative zu dem EBF-Element oder dem RSU-Element darstellt, das einwandfrei herstellbar ist und das eine angemessene Verdrehsicherheit bzw. einen angemessenen axialen Auspresswiderstand bietet.

Eine solche Verdrehsicherheit ist deshalb notwendig, da bei Anbringung des Funktionselements an ein Blechteil und der anschließenden Anbringung einer Mutter auf dem Bolzenelement bzw. die Einführung eines Bolzens in ein Mutterelement, um ein weiteres Bauteil gegen das Blechteil zu sichern, nicht unerhebliche Drehmomente auftreten, die sonst zu einer Lockerung des Bolzenelements bzw. des Mutterelements führen können. Solche Drehmomente entstehen auch bei dem Lösen der entsprechenden Schraubverbindung. Ferner ist ein axialer Auspresswiderstand sowie ein Ausknöpfwiderstand deshalb von Bedeutung, weil Blechteile, die mit den jeweiligen Funktionselementen ausgestattet sind, häufig als Schüttgut in Kisten von einem Werk zum anderen oder innerhalb eines Werkes transportiert werden. Dies kann zu einer Lockerung des Funktionselements in den einzelnen Blechteilen führen, was für die spätere Verarbeitung nachteilig ist. Ferner wird häufig bei der Anbringung eines weiteren Bauteils auf das mit einem Funktionselement ausgestattete Blechteil mit automatischen Schraubwerkzeugen gearbeitet, die bei der Anbringung einer Mutter auf ein Bolzenelement bzw. beim Einschrauben eines Bolzens in ein Mutterelement nicht unerhebliche Axialkräfte auf das jeweilige Funktionselement ausüben, wodurch die Gefahr einer Lockerung des Funktionselements im Blechteil bzw. eines Versagens der Verbindung zwischen dem Blechteil und dem Funktionselement besteht, wenn die Verdrehsicherheit, der Auspresswiderstand und der Ausknöpfwiderstand nicht im erforderlichen Maße gewährleistet sind.

Zur Lösung der oben genannten Aufgabe wird zunächst ein Funktionselement gemäß Anspruch 1 vorgesehen. D.h. es wird ein Funktionselement in Form eines Einpresselements zur Befestigung an ein Blechteil vorgesehen, wobei das Funktionselement einen Kopfteil und einen Schaftteil aufweist, der Kopfteil auf der dem Schaftteil zugewandten Seite eine ringförmige Blechanlagefläche aufweist und innerhalb dieser ringförmigen Blechanlagefläche eine ringförmige axiale Vertiefung - im Folgenden auch Ringvertiefung genannt - aufweist, die am Übergang des Kopfteils in den Schaftteil diesen umgibt, wobei der Schaftteil mehrere umfangsmäßig verteilte, sich in axialer Richtung erstreckende radiale Vertiefungen und dazwischen sich ebenfalls axial erstreckende und radial hervorstehende Nasen aufweist. Materialerhöhungen, die im Bereich der ringförmigen Vertiefung mit dem Kopfteil Hinterschneidungen bilden, sind vorzugsweise an dem Schaftteil ausgebildet. Sie können an den Stellen bzw. im Bereich der radialen Vertiefungen angeordnet sein, insbesondere an deren dem Kopfteil zugewandten axialen Enden. Ferner sind sich radial erstreckende Verdrehsicherungsrippen oder anderweitige Verdrehsicherungsmerkmale (wie zum Beispiel diskrete in Draufsicht kreisförmige oder quadratische Erhebungen und/oder Vertiefungen oder sich abwechselnde Erhöhungen und Vertiefungen, im Folgenden der Einfachheit halber lediglich als Verdrehsicherungsrippen bezeichnet) im Bodenbereich der ringförmigen Vertiefung vorgesehen, die vorzugsweise an Stellen angeordnet sind, die im Vergleich zu den Stellen der radialen Vertiefungen winkelmäßig versetzt sind, bspw. jeweils in der Mitte zwischen zwei einander folgenden radialen Vertiefungen. Grundsätzlich kann aber ein beliebiger Winkel zwischen den Verdrehsicherungsrippen und den Vertiefungen vorgesehen sein, um den jeweiligen Anforderungen Rechnung tragen zu können. Es ist auch möglich, eine unterschiedliche Anzahl von Verdrehsicherungsrippen und Vertiefungen vorzusehen. Denkbar wäre es auch erfindungsgemäß auch, Verdrehsicherungsmerkmale an der ringförmigen Anlagefläche anstelle oder zusätzlich zu den Verdrehsicherungsmerkmalen im Bodenbereich der Ringvertiefung vorzusehen. Die Verdrehsicherungsrippen können die ringförmige Vertiefung teilweise oder vollständig durchqueren oder überbrücken. Es ist aber auch denkbar, die Erstreckung der Verdrehsicherungsrippen in radialer Richtung kleiner zu gestalten als die in radialer Richtung definierte Breite der ringförmigen Vertiefung.

Durch die vorstehend beschriebenen Maßnahmen kann das Blechmaterial in engen Kontakt mit den radial vorstehenden Nasen bzw. mit den Bodenflächen der radialen Vertiefungen sowie mit den in der Ringvertiefung axial vorstehenden radialen Verdrehsicherungsrippen gebracht werden, so dass hier und insbesondere an den vorzugsweise radial gerichteten Flanken der Nasen und an den sich axial erstreckenden Flanken der Verdrehsicherungsrippen eine Verdrehsicherung erreicht wird. Darüber hinaus kann das Blechmaterial in die genannten Hinterschneidungen eingebracht werden, die durch die Materialerhöhungen gebildet werden, wodurch ein axialer Auspresswiderstand erzeugt wird. Ferner kann das Blechmaterial in Umfangsrichtung betrachtet an den seitlichen Begrenzungen der Materialerhöhungen anliegen, wodurch eine zusätzliche Verdrehsicherung erzeugt wird.

Bei der Ausbildung des Schaftteils als Gewinde wird das Blechmaterial ferner so verformt, dass der dem Kopfteil des Funktionselements abgewandte Bereich des Blechmaterials dem dem Kopfteil zugewandten axialen Ende des Gewindes gegenüberliegt und radial innerhalb des Außendurchmessers des Gewindes liegt.

Da das Gewinde durch einen Gewindewalzvorgang nach der Herstellung der radialen Vertiefungen und der Nasen hergestellt wird, begünstigt die mit dem Gewindewalzen einhergehende Vergrößerung des Schaftteils die vorherige Herstellung der radialen Vertiefungen und Nasen, da dann der Schaftteil im Bereich des noch herzustellenden Gewindes einen kleineren Durchmesser aufweist, der die Erzeugung der genannten Vertiefungen und Nasen durch das axiale Verschieben des Materials des Schaftteils vereinfacht. Wenn diese Situation nicht vorliegt, müssten die radialen Vertiefungen durch eine radiale Verformung des Schaftteils erzeugt werden, was grundsätzlich möglich wäre.

Die Vergrößerung des Durchmessers im Bereich des Gewindes nach dessen Herstellung bildet einen an den dem Kopfteil abgewandten axialen Enden der genannten Vertiefungen und Nasen angrenzenden Gewindeauslauf, der als Anschlag für das Blechmaterial dient und den Auspresswiderstand sicherstellt. Falls die genannten Materialerhöhungen und entsprechende Hinterschneidungen vorgesehen sind, ergänzt der Eingriff des Blechmaterials in den Hinterschneidungen den Auspresswiderstand. Falls bei einem Bolzenelement der Gewindeauslauf nicht vorliegt bzw. nicht vorgesehen ist, bildet der Eingriff des Blechmaterials in den Hinterschneidungen alleine den erforderlichen Formschluss zur Erzeugung des Auspresswiderstands.

Bei einem weiblichen Element kann ein entsprechender im Durchmesser vergrößerter und als Anschlag dienender Beriech am freien Endabschitt des Schaftteils vorgesehen werden und den Auspresswiderstand in entsprechender Weise zu dem bei einem Bolzenelement vorgesehenen Gewindeauslauf sicherstellen. Sollte eine solche Formgebung nicht vorliegen, ist dann das Vorhandensein der genannten Hinterschneidungen und ein Eingriff des Blechmaterials in diesen erforderlich um den erforderlichen Formschluss zur Erzeugung des Auspresswiderstands zu erzeugen.

Selbst bei einer geringfügigen Lockerung des Funktionselements im Blechteil ist ein axialer Verlust des Elements nicht ohne weiteres möglich, da das Blechmaterial gegen das Ende des Gewindes anstoßen wird. Eine derartige Sicherung ist auch bei der Ausbildung als Mutterelement gegeben, sofern der Schaftteil auf der dem Kopfteil abgewandten Seite der Nasen bzw. der axialen Vertiefungen einen größeren Durchmesser als im Bereich der Nasen aufweist, wodurch das Funktionselement nicht aus dem Blechteil herausgepresst werden kann. Ein solches Herauspressen wird deshalb vermieden, da die Schulter, die am Übergang zu dem einen größeren Durchmesser aufweisenden Bereich gebildet ist, gegen die dem Kopfteil des Mutterelements abgewandte Seite des Blechteils anstößt bzw. anstoßen wird.

Bei beiden Ausführungsvarianten, d.h. als männliches oder weibliches Element, ist ein axialer Verlust des Elements in die andere Richtung schon deshalb nicht möglich, weil die radiale Blechanlagefläche des Kopfteils an dem Blechteil anliegt und einen deutlichen größeren Durchmesser aufweist als das Loch im Blechteil. Somit wird ein axialer Verlust in beiden axialen Richtungen verhindert.

Ferner wird das Blechmaterial bei der Anbringung des Funktionselements axial innerhalb der ringförmigen Vertiefung und radial an die sich umfangsmäßig abwechselnden vorspringenden Nasen und radialen Vertiefungen in Kontakt gebracht, wodurch sich eine besonders stabile Form ergibt, die auch gegen Ausknöpfkräfte widerstandsfähig ist. Die dort entstehende Lochlaibung unterstützt auch die Verdrehsicherheit und den Auspresswiderstand.

Durch die Größe des Kopfteils bzw. dem Durchmesser der Blechanlagefläche in Kombination mit dem Formschluss mit dem Blechmaterial und dem axialen Auspresswiderstand wird somit auch ein ausreichender Ausknüpfwiderstand der Elemente sichergestellt.

Durch die Verformung des Blechmaterials in die ringförmige Vertiefung hinein, wird ferner eine satte Anlage des Kopfteils auf dem Blechteil erreicht, wodurch Verformungen und Verwerfungen des Blechteils im Bereich des Kopfteils des Elements vermieden werden können. Die Ringnut bildet ferner einen Aufnahmeraum für das Material, das durch die Erzeugung der radialen Nuten bzw. Vertiefungen entsteht, so dass die entsprechenden Materialerhöhungen den Übergang vom Kopfteil in den Schaftteil nicht stören.

Ferner ist die Anbindung zwischen dem Funktionselement und dem Blechteil im Bereich des Übergangs vom Schaftteil in den Kopfteil so realisierbar, dass hier ein verhältnismäßig kleiner Durchmesser des Schaftteils und des Loches im Blechteil vorliegt, so dass die spätere Anbringung eines weiteren Bauteils an der dem Kopfteil des Funktionselements abgewandten Seite des Blechteils ohne Komplikationen von statten gehen kann und das weitere Bauteil lediglich eine entsprechende Lochung aufweisen muss. Diese Anbringung eines weiteren Bauteils auf das Blechteil kann daher so erfolgen, dass die erwünschte "direkte Klemmung" möglich ist, und zwar ohne mit lastverteilenden gelochten Scheiben arbeiten zu müssen.

Vorzugsweise werden von zwei bis zwölf radiale Vertiefungen, vorzugsweise vier bis acht und insbesondere sechs radiale Vertiefungen vorgesehen, wobei jede radial vorstehende Nase zwischen zwei benachbarten radialen Vertiefungen vorgesehen ist, d.h. die Vertiefungen und Nasen sind abwechselnd um die Längsachse des Funktionselements angeordnet.

Die Hinterschneidungen befinden sich vorzugsweise axial innerhalb der ringförmigen axialen Vertiefung. An dieser Stelle gelangen die genannten Materialerhöhungen des Schaftteils in einen hochwertigen gesicherten Eingriff mit dem Blechmaterial, ohne Verwerfungen des Blechmaterials zu verursachen, zumal das Blechmaterial beim Stauchen in die axiale Ringvertiefung des Kopfteils ausweichen kann.

Erfindungsgemäß kann vorgesehen sein, dass zumindest eine, insbesondere alle der sich radial erstreckenden Verdrehsicherungsrippen eine freie Oberkante aufweist, die zumindest abschnittsweise, insbesondere im Wesentlichen vollständig in einer Ebene liegt, die durch die ringförmige Blechanlagefläche definiert wird. Als freie Oberkante ist insbesondere die der dem Kopfteil bzw. dem Bodenbereich der ringförmigen Vertiefung abgewandte und in einem nicht montierten Zustand des Funktionselements freiliegende Seite der Verdrehsicherungsrippen zu verstehen.

Wie vorstehend bereits erwähnt, kann auf der ringförmigen Blechanlagefläche zumindest ein Verdrehsicherungsmerkmal oder -abschnitt, beispielsweise eine Rippe oder ähnliches, angeordnet sein. Dieser Verdrehsicherungsabschnitt kann in radialer Richtung mit einer der Verdrehsicherungsrippen fluchten und/oder in diese übergehen. Beispielsweise bilden auf der Blechanlagefläche liegenden Verdrehsicherungsabschnitte und entsprechende Verdrehsicherungsrippen durchgehende, insbesondere in radialer Richtung lineare durchgehende rippenartige Strukturen, die in axialer Richtung eine konstante oder variable Erstreckung aufweisen.

Gemäß einer Ausführungsform weist zumindest eine der sich radial erstreckenden Verdrehsicherungsrippen in radialer Richtung eine Erstreckung auf, die kleiner ist als die in radialer Richtung definierte Breite der ringförmigen Vertiefung. Mit anderen Worten durchquert zumindest eine der Verdrehsicherungsrippen die ringförmige Vertiefung nicht vollständig, sondern nur teilweise. Beispielsweise erstrecken sich die Verdrehsicherungsrippen ausgehend von dem radial außen liegenden Rand der ringförmigen Vertiefung in radialer Richtung nach innen und enden vor Erreichen des Schaftteils. Die ringförmige Vertiefung wird so in nicht in vollkommen voneinander getrennte separate Segmente geteilt, sondern es liegen einzelne taschenförmige Abschnitte vor, die durch einen ringförmigen Bereich miteinander verbunden sind, der den Schaftteil umgibt. Es versteht sich, dass auch eine inverse Ausgestaltung denkbar ist, bei der sich die Verdrehsicherungsrippen ausgehend von dem Schaftteil in Richtung zu dem äußeren Rand der ringförmigen Vertiefung hin erstrecken, die jedoch enden, bevor sie diesen erreichen. Grundsätzlich ist es auch möglich, dass die Verdrehsicherungsrippen (d.h. zumindest eine der Rippen) weder mit dem radial äußeren und dem radial inneren Rand der ringförmigen Vertiefung oder alternierend mit den genannten Rändern in Kontakt stehen.

Die sich radial erstreckende Verdrehsicherungsrippen weisen vorzugsweise eine maximale axiale Höhe auf, die kleiner ist als die maximale axiale Tiefe der ringförmigen Vertiefung, wobei die axiale Höhe der Verdrehsicherungsrippen vorzugsweise im Bereich zwischen 25% und 90% und insbesondere im Bereich zwischen 50% und 85% und speziell etwa 80% der genannten Tiefe liegt bzw. beträgt.

Bei dem Funktionselement handelt es sich in einer Variante um ein an seinem Schaftteil ein Gewinde aufweisendes Bolzenelement, wobei der Außendurchmesser des Gewindes einen Radius aufweist, der größer ist als die (maximale) radiale Abmessung von der Längsachse des Schaftteils zu der Bodenfläche der radialen Vertiefungen.

Ferner weist der Außendurchmesser des Gewindes einen Radius auf, der größer ist als die (maximale) radiale Abmessung von der Längsachse des Schaftteils zu der radial äußeren Fläche der radial vorstehenden Nasen.

Die Bodenflächen der radialen Vertiefungen und/oder die äußere Flächen der Nasen liegen vorzugsweise zumindest im Wesentlichen auf jeweiligen kreiszylindrischen Flächen bzw. sie bilden Segmente von solchen kreiszylindrischen Flächen. Die Bodenflächen der Vertiefungen haben dann eine konstante radiale Abmessung wie auch die äußeren Flächen der Nasen. Dies ist allerdings nicht zwingend erforderlich, da andere Konturen der entsprechenden Flächen möglich wären, wodurch die genannten radialen Abmessungen nicht konstant wären, jedoch von der maximalen radialen Abmessung gesprochen werden kann.

Da die genannten maximalen radialen Abmessungen der sich abwechselnden Nasen und Vertiefungen vorzugsweise kleiner sind als der Außendurchmesser des Gewindes, kann sichergestellt werden, dass das Blechmaterial radial innerhalb des Außendurchmessers des Gewindes liegt und die vorerwähnte axiale Sicherung des Bolzenelements gewährleistet ist.

Dabei können die die Hinterschneidungen bildenden Materialerhöhungen eine von der mittleren Längsachse des Funktionselements gemessene maximale radiale Abmessung aufweisen, die der radialen Abmessung des Gewindes zumindest im Wesentlichen entspricht oder gar etwas größer ist, wodurch eine bessere Verdrehsicherheit erreichbar ist.

Das Gewinde ist vorzugsweise an seinem dem Kopfteil zugewandten Ende unmittelbar vor den dem Kopfteil abgewandten Enden der radialen Vertiefungen bzw. der Nasen angeordnet. Hierdurch wird nicht nur der erwünschte "Anschlag" für das Blechmaterial an einer günstigen Stelle gebildet, sondern das Gewinde kann unproblematisch durch einen Gewindewalzvorgang hergestellt werden, da die axiale Länge der Nasen und Vertiefungen bedeutet, dass das Gewinde vor dem Kopfteil ausläuft. Dies erleichtert den Gewindewalzvorgang, da dieser nicht mehr, wie beim EBF-Bolzen, bis unmittelbar vor dem Kopfteil durchgeführt wird.

Wenn es sich bei dem Einpresselement um ein hohles Element handelt, dessen hohle mittlere Passage mit einem Gewinde versehen ist oder versehbar ist, kann ebenfalls der Schaftteil auf der dem Kopfteil abgewandten Seite der Nasen und Vertiefungen mit einem Durchmesser ausgeführt werden, der größer ist als der Durchmesser des Schaftteils im Bereich der Nasen. Dies kann beispielsweise durch einen axialen Stauchvorgang erreicht werden.

Ferner kann das freie Stirnende des Schafteils, egal ob der Durchmesser größer ist als der Durchmesser des Schaftteils im Bereich der Nasen, zum Durchstanzen des Blechteils ausgebildet werden, so dass das Mutterelement beim Einsetzen in das Blechteil zusammen mit einer geeigneten Matrize das eigene Loch im Blechteil schneidet. D.h. das Mutterelement wird selbststanzend ausgebildet.

Bei der Anbringung des erfindungsgemäßen Funktionselements an ein Blechteil entsteht ein Zusammenbauteil mit dem besonderen Kennzeichen, dass das Blechteil sich innerhalb der Ringvertiefung um die sich radial erstreckende Rippen herum, in den axialen Vertiefungen und in den Hinterschneidungen erstreckt und hierdurch den erforderlichen Auspresswiderstand bzw. die erforderliche Verdrehsicherheit gewährleistet.

Das Zusammenbauteil ist vorzugsweise so ausgelegt, dass die dem Kopfteil abgewandte Seite des Blechteils im Bereich benachbart zum Schaftteil bei einem Bolzenelement unmittelbar vor dem dem Kopfteil zugewandten Ende des Gewindes und bei einem hohlen Element unmittelbar vor einem Endabschnitt des hohlen Schaftteils angeordnet ist.

Gerade bei relativ dünnen Blechteilen bis etwa 1 bis 1,5 mm Dicke wird das Zusammenbauteil so ausgelegt, dass das Blechteil auf der dem Kopfteil abgewandten Seite einen ringförmigen Kragen aufweist, dessen radial innere Fläche eng an den Nasen bzw. den Bodenflächen der radialen Vertiefungen anliegt. Dabei kann der Ringkragen eine axiale Länge unterhalb der Blechunterseite von beispielsweise 1 bis 3 mm aufweisen, in etwa entsprechend der Länge der Nasen.

Bei dickeren Blechteilen ab 1 oder 1,5 mm Dicke wird das Blechteil durch eine Nase bzw. eine Ringnase einer Matrize so eingeprägt, dass das Blechmaterial sich zumindest im Wesentlichen über die ganze axiale Länge der Nasen erstreckt. Ein großer Vorteil des Funktionselements der Erfindung ist, das ein Element mit Blechteilen verschiedener Dicken verwendet werden kann, beispielsweise von 0,6 bis 4 mm, was die Lagerhaltung und die Kosten für den Anwender günstiger gestaltet.

Durch die Stauchung des Blechmaterials durch die entsprechende Matrize bei der Anbringung an das Blechteil wird das Blechmaterial zum Fließen gebracht und liegt dadurch zwischen den Materialerhöhungen an der Oberfläche des Elements an.

Ein Verfahren zur Herstellung des erfindungsgemäßen Funktionselements in Form eines männlichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung, die den Schaftteil auf der dem Schaftteil zugewandten Seite des Kopfteils umgibt und von sich radial erstreckende Rippen zumindest teilweise überquert wird und vorzugsweise mit einem Materialbund um den Schaftteil im Bereich benachbart zum Kopfteil ausbildet, dass durch das Kaltschlagverfahren das Material des Schaftteils bzw. (falls vorgesehen) des Bundes stellenweise verschoben wird, um die sich in axialer Richtung erstreckende radiale Vertiefungen und die Hinterschneidungen bildende Materialerhöhungen an den dem Kopfteil zugewandten Enden der radialen Vertiefungen sowie zwischen den radialen Vertiefungen angeordneten Nasen auszubilden, und dass anschließend ein Gewinde auf dem Schaftteil kurz vor oder unmittelbar vor den dem Kopfteil abgewandten axialen Enden der radialen Vertiefungen ausgebildet wird.

Ein Verfahren zur Herstellung eines Funktionselements in Form eines weiblichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung, die den Schaftteil auf der dem Schaftteil zugewandten Seite des Kopfteils umgibt und von sich radial erstreckende Rippen zumindest teilweise überquert wird und vorzugsweise mit einem Materialbund um den Schaftteil im Bereich benachbart zum Kopfteil erzeugt, dass durch das Kaltschlagverfahren das Material des Schaftteils bzw. (falls vorgesehen) des Bundes stellenweise verschoben wird, um die sich in axialer Richtung erstreckenden radialen Vertiefungen und die Hinterschneidungen bildenden Materialerhöhungen an den dem Kopfteil zugewandten Enden der radialen Vertiefungen sowie zwischen den radialen Vertiefungen angeordneten Nasen auszubilden, und dass eine sich axial erstreckende mittlere Passage im Schaftteil und im Kopfteil ausgebildet wird.

Dabei kann das freie Stirnende des Mutterelements gestaucht werden, um den Radius des Stirnendes von der Längsachse zu erhöhen, damit dieser größer ist als der des Schaftteils im Bereich der radialen Vertiefungen und vorzugsweise der des Schaftteils im Bereich der Nasen, und gegebenenfalls um eine Stanzkante am freien Ende des Schaftteils auszubilden.

Die Erfindung wird nachfolgend anhand der beigefügten Zeichnungen näher erläutert, in welchen zeigen:
- Fig. 1A: eine perspektivische Darstellung eines erfindungsgemäßen Funktionselements in Form eines Bolzenelements,
- Fig. 1B-1D: Darstellungen des erfindungsgemäßen Bolzenelements der Fig. 1A in einer teilweise in Längsrichtung geschnittenen Seitenansicht (Fig. 1B), eine vergrößerte Darstellung des in Fig. 1B eingekreisten Bereiches bei dem Übergang des Kopfteils in den Schaftteil (Fig. 1C) und eine Stirnansicht auf das freie Stirnende des Schaftteils des Bolzenelements (Fig. 1D).
- Fig. 2A-2C: eine Zeichnungsreihe zur Darstellung der Anbringung des Bolzenelements gemäß den Fig. 1A bis 1D an ein verhältnismäßig dickes Blechteil,
- Fig. 3A-3C: eine Zeichnungsreihe zur Darstellung der Anbringung des Bolzenelements gemäß den Fig. 1A bis 1D an ein verhältnismäßig dünnes Blechteil,
- Fig. 4A-4D: eine Zeichnungsreihe entsprechend den Fig. 1A bis 1D, jedoch für ein erfindungsgemäßes Funktionselement in Form eines Mutterelements,
- Fig. 5A-5C: eine Zeichnungsreihe zur Darstellung der Anbringung des Mutterelements gemäß den Fig. 4A bis 4D an ein verhältnismäßig dickes Blechteil,
- Fig. 6A-6C: eine Zeichnungsreihe zur Darstellung der Anbringung des Mutterelements gemäß den Fig. 4A bis 4D an ein verhältnismäßig dünnes Blechteil,
- Fig. 7A: eine perspektivische Darstellung einer weiteren Ausführungsform des erfindungsgemäßen Funktionselements,
- Fig. 7B-7D: Darstellungen des Funktionselements der Figur 7A in einer teilweise in Längsrichtung geschnittenen Seitenansicht (Fig. 7B), eine vergrößerte Darstellung des in Figur 7B eingekreisten Bereichs bei dem Übergang des Kopfteils in den Schaftteil (Figur 7C) und eine Stirnansicht auf das freie Stirnende des Schaftteils des Funktionselements (Figur 7D), in einem ersten Zustand während des Herstellungsverfahrens,
- Fig. 7E-7G: analoge Darstellungen zu den Figuren 7B bis 7D, wobei das Funktionselement in einem zweiten Zustand während des Herstellungsprozesses dargestellt ist,
- Fig. 7H-7J: analoge Darstellungen zu den Figuren 7B bis 7D bzw. 7E bis 7G, wobei das Funktionselement in einem dritten Zustand dargestellt ist,
- Fig. 8A: eine perspektivische Darstellung einer weiteren Ausführungsform des erfindungsgemäßen Funktionselements,
- Fig. 8B-8D: weitere Darstellungen der Ausführungsform des erfindungsgemäßen Funktionselements der Figur 8A in zu den Figuren 1B bis 1D analogen Ansichten,
- Fig. 9A: eine perspektivische Darstellung einer weiteren Ausführungsform des erfindungsgemäßen Funktionselements und
- Fig. 9B-9C: Darstellungen der Ausführungsformen des erfindungsgemäßen Funktionselements der Figur 9A in zu den Figuren 1B bis 1D analogen Ansichten.

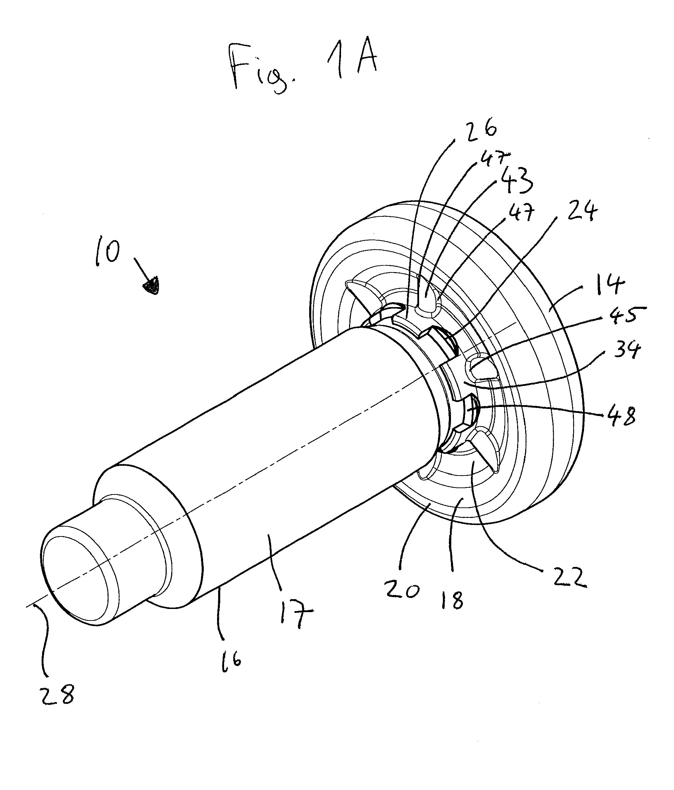

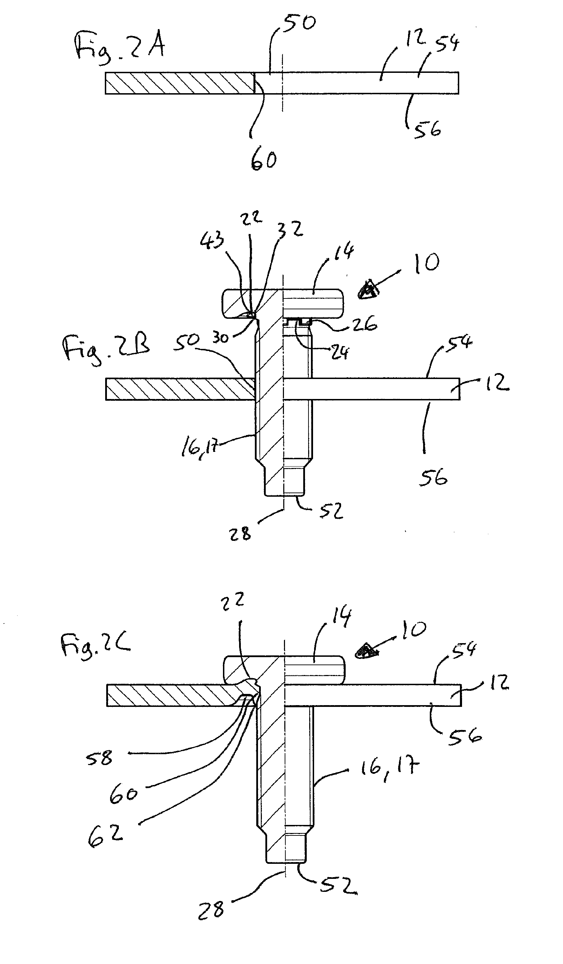

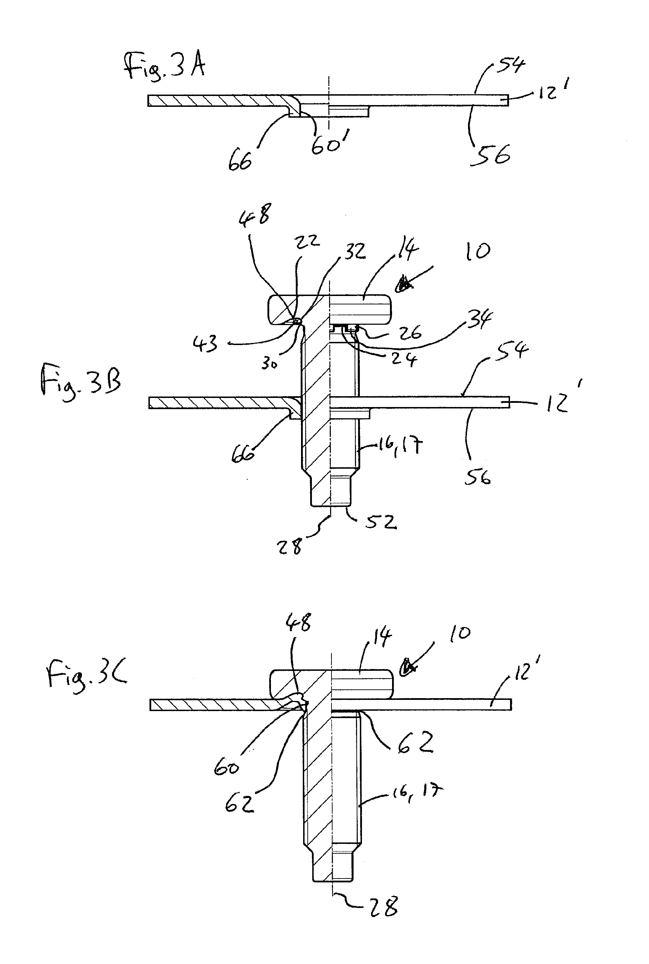

Bezug nehmend auf die Fig. 1A bis 1D ist dort ein Funktionselement 10 in Form eines Einpresselements gezeigt, das zur Befestigung an ein Blechteil 12 oder 12' gemäß den Fig. 2A bis 2C bzw. 3A bis 3C ausgelegt ist. Das Funktionselement 10 weist einen Kopfteil 14 und einen Schaftteil 16 auf.

Der Kopfteil 14 hat auf der dem Schaftteil 16 zugewandten Seite 18 eine ringförmige Blechanlagefläche 20 und innerhalb dieser eine ringförmige axiale Vertiefung 22, die am Übergang des Kopfteils in den Schaftteil 16 diesen umgibt. Ferner weist der Schaftteil 16 in diesem Beispiel sechs umfangsmäßig verteilte, sich in axialer Richtung erstreckende radiale Vertiefungen 24 und dazwischen ebenfalls sechs sich axial erstreckende und radial hervorstehende Nasen 26 auf, die sich mit den radialen Vertiefungen um die mittlere Längsachse 28 des Bolzenelements abwechseln. An den Stellen der radialen Vertiefungen 24 liegen an deren dem Kopfteil zugewandten axialen Enden Materialerhöhungen 30 vor, die im Bereich der ringförmigen axialen Vertiefung 22 mit dem Kopfteil Hinterschneidungen 32 bilden.

Die sich axial erstreckenden radialen Vertiefungen werden bei der Herstellung des Elements aus einem zylindrischen Bereich eines Rohlings hergestellt, der den gleichen Durchmesser aufweist wie die radial äußeren Seiten 34 der Nasen 26.

Man sieht ferner, dass der Außendurchmesser des Gewindes 17 einen Radius aufweist, der größer ist als die (maximale) radiale Abmessung von der Längsachse 28 des Schaftteils 16 zu der Bodenfläche 48 der radialen Vertiefungen 24. Ferner sieht man, dass der Außendurchmesser des Gewindes 17 einen Radius aufweist, der größer ist als die (maximale) radiale Abmessung von der Längsachse 28 des Schaftteils 16 zu der radial äußeren Fläche der radial vorstehenden Nasen 26.

Die Bodenflächen 48 der radialen Vertiefungen 24 und/oder die äußeren Flächen der Nasen 26 liegen in diesem Beispiel auf jeweiligen kreiszylindrischen Flächen bzw. sie bilden Segmente von solchen kreiszylindrischen Flächen. Das Bolzenelement hat somit im Bereich der Nasen eine Querschnittsform ähnlich der einer Keilwelle. Die Bodenflächen 48 der Vertiefungen 24 haben somit eine konstante radiale Abmessung wie auch die äußere Flächen der Nasen 26.

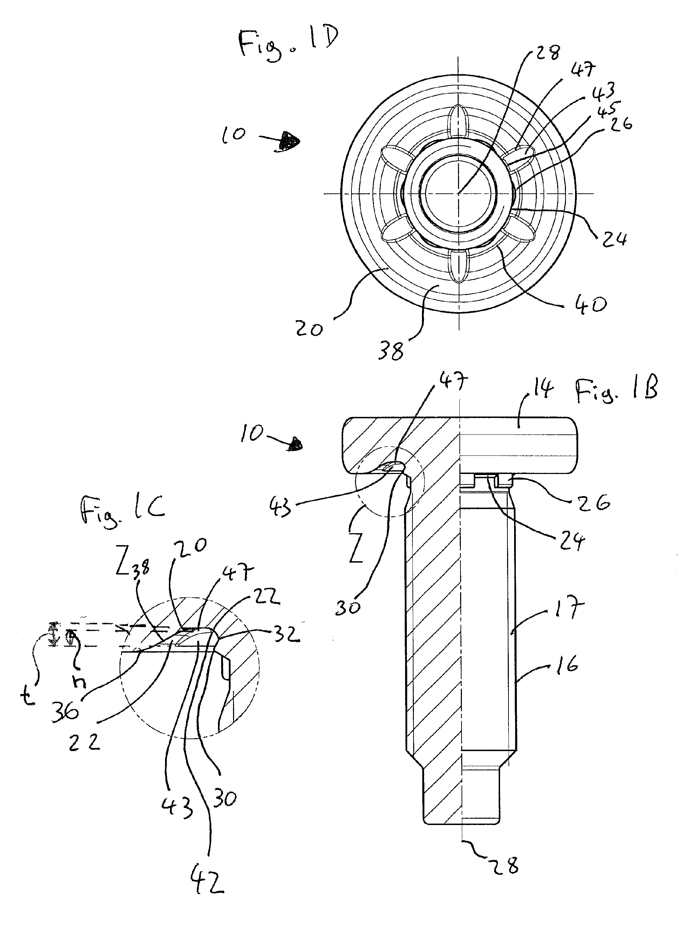

Insbesondere aus der Fig. 1C geht die Formgebung der axialen Ringvertiefung 22 im Querschnitt hervor. Zunächst wird darauf hingewiesen, dass radial erstreckenden Verdrehsicherungsrippen 43 vorgesehen sind, die im Bodenbereich der Ringvertiefung 22 angeordnet sind.

Die Ringvertiefung 22 - gelegentlich auch als Ringnut bezeichnet - hat eine radial außen liegende schräge Flanke 36, die mit einem gerundeten Übergang 38 in die ringförmige Blechanlagefläche 20 übergeht. Der Bodenbereich 40 der Ringnut ist ebenfalls mit einer sanften Rundung 42 ausgebildet und geht über eine gerundete Fläche (nicht ersichtlich, aber von der Form her entsprechend dem Radius 44 der Hinterschneidungen 32 gestaltet) in den Schaftteil 16 zwischen den Materialerhöhungen 30 über. Man sieht ferner aus der Fig. 1C, dass die Hinterschneidungen 30 sich axial innerhalb der Ringnut 22 befinden.

Die die Hinterschneidungen 32 bildenden Materialerhöhungen 30 haben eine von der mittleren Längsachse 28 des Funktionselements gemessene maximale radiale Abmessung, die der radialen Abmessung des Gewindes 17 zumindest im Wesentlichen entspricht oder gar etwas größer ist, wodurch eine bessere Verdrehsicherheit erreichbar ist.

Ansonsten hat die Ringvertiefung eine in etwa rechteckige Querschnittsform mit einer schräggestellten Flanke 36. Die genaue Querschnittsform ist nicht kritisch, doch sollen, wenn möglich, scharfe Kanten vermieden werden.

Die Verdrehsicherungsrippen 43 sind, wie hier gezeigt, vorzugsweise an Stellen angeordnet, die im Vergleich zu den Stellen der radialen Vertiefungen um die mittlere Längsachse des Funktionselements winkelmäßig versetzt und bspw. jeweils in der Mitte zwischen zwei einander folgenden radialen Vertiefungen angeordnet sind. Die dargestellte Position der Verdrehsicherungsrippen im Vergleich zu den radialen Vertiefungen 24 ist zwar derzeit, die am günstigsten erscheinende Position, es ist allerdings nicht ausgeschlossen, dass die Verdrehsicherungsrippen 43 im Vergleich zu den radialen Vertiefungen winkelmäßig nicht um die halbe Teilung wie gezeigt, aber mit einer anderen Position im Uhrzeigersinn links oder rechts von der dargestellten mittleren Position angeordnet werden und zwar gerade dann wenn sie etwas schmäler ausgebildet sind als her gezeigt. Sie sollen aber nicht mit den radialen Vertiefungen 24 ausgerichtet werden oder die Stellen der radialen Vertiefungen 24 teilweise überlappen, da sonst die durch die am Ende der radialen Vertiefungen angeordneten Hinterschneidungen, die durch die Materialerhöhungen 30 gebildet sind, verloren gehen oder nicht voll zur Verfügung stehen.

Wie ebenfalls aus den Figuren insbesondere aus der Fig. 1C ersichtlich weisen die sich radial erstreckende Verdrehsicherungsrippen 43 eine maximale axiale Höhe h aufweisen, die kleiner ist als die maximale axiale Tiefe t der ringförmigen Vertiefung 22, wobei die axiale Höhe h der Verdrehsicherungsrippen vorzugsweise im Bereich zwischen 25% und 90% und insbesondere im Bereich zwischen 50% und 85% und speziell etwa 80% der genannten Tiefe t liegt bzw. beträgt..

Die Verdrehsicherungsrippen 43 können die gezeigte bevorzugte Formaufweisen, d.h. mit Wurzeln 45, die sich an den Nasen 34 anschließen und mit einer gerundeten Form, die - je nach Höhe h - im Bereich des Übergangs 38 oder der seitlichen Flanke oder Schrägflache 36 der Ringvertiefung 22 ausläuft, sie können aber auch schmäler und mit seitlichen Flanken 47 ausgeführt werden, die steiler verlaufen als in den Figuren gezeigt. Dies gilt grundsätzlich in analoger Form für alle denkbaren Ausführungsformen.

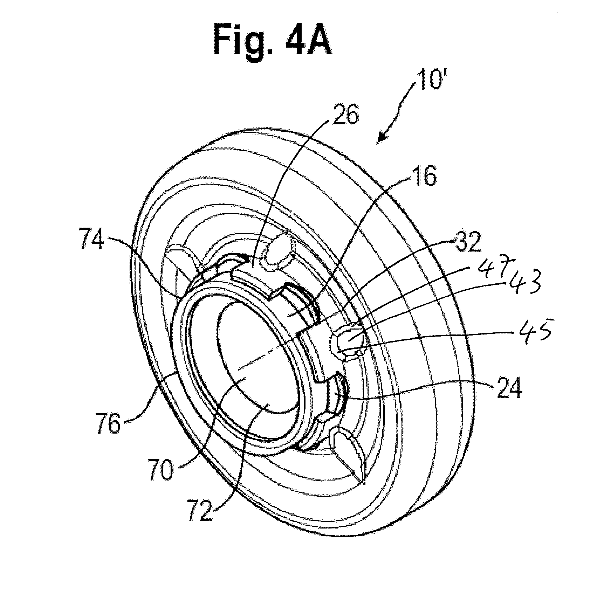

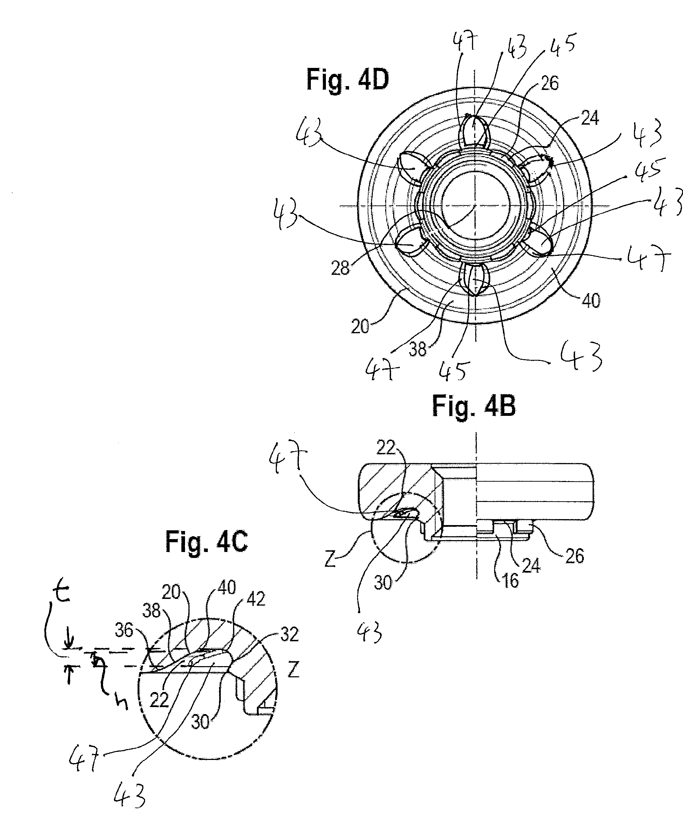

Die bevorzugten Abmessungen des Bolzenelements wie auch des Mutterelements 10' gemäß den Fig. 4A bis 4D können den maßstabsgetreuen Zeichnungen entnommen werden, wenn man als Grundmaße für die Skalierung den Durchmesser des Gewindes der Skalierung zugrunde legt, beispielsweise eines M6- oder M8-Gewindes.

Die Übergänge zwischen den Nasen 26 und den radialen Vertiefungen 24 sind vorzugsweise als radiale Flanken 46 ausgebildet, d.h. Flanken, die in radialen Ebenen zur Längsachse 28 liegen. Hierdurch kann die Verdrehsicherheit gewährleistet werden. Obwohl sechs Nasen 26 und sechs radiale Vertiefungen mit in etwa der gleichen Winkelerstreckung bevorzugt sind, kann eine andere Anzahl von Nasen 26 und radialen Vertiefungen 24 wie auch unterschiedliche Winkelerstreckungen dieser gewählt werden. Zu viele Nasen und radiale Vertiefungen, beispielsweise mehr als zwölf von beiden, sind normalerweise ungünstig, da es schwierig ist, diese auszubilden und zugleich eine hohe Verdrehsicherheit zu gewährleisten. Eine Anzahl der Nasen 26 und der radialen Vertiefung von weniger als drei oder vier macht es auch schwierig, die erwünschte Verdrehsicherheit sicherzustellen.

Die Fig. 2A bis 2C zeigen nun die Anbringung des Bolzenelements gemäß den Fig. 1A bis 1D an ein Blechteil 12, das hier als relativ dickes Blechteil mit einer Dicke von 3 mm bei einem M8-Gewinde zu verstehen ist. Bei der Anbringung des Bolzenelements, die in einer Presse oder in einem C-Gestell oder von einem Roboter in an sich bekannter Weise erfolgen kann, weist das vorgelochte (glattgelochte) Blechteil 12 (Fig. 2A) ein Loch bzw. Stanzloch 50 mit einer zylindrischen Gestalt mit einem Durchmesser entsprechend dem des Gewindes auf, d.h. in diesem Beispiel 8 mm.

Der Schaftteil 16 des von einem entsprechenden Werkzeug bzw. Setzkopf (nicht gezeigt) im Kopfteilbereich gehaltenen Bolzenelements 10 wird mit dem freien Stirnende 52 des Schaftteils 16 voran durch das Loch 50 hindurchgeführt (Fig. 2B). Anschließend, beispielsweise in einer weiteren Schließbewegung der Presse, wird der Kopfteil 14 gegen die Oberseite 54 des Blechteils 12 gedrückt, während dieses auf der Unterseite 56 auf einer Matrize (nicht gezeigt) abgestützt ist. Dabei hat die Matrize eine mittlere Öffnung, die den Schaftteil 16 des Bolzenelements aufnimmt und eine von ihrer planaren Stirnseite vorstehende Ringnase mit einer Formgebung komplementär zu der der eingeprägten Ringvertiefung 58 in der Unterseite des Blechteils 12. Durch die Einprägung der Ringvertiefung 58 wird das Blechmaterial im Randbereich 60 des Loches 50 radial nach innen in die radialen Vertiefungen 24, zur Anlage an den Bodenflächen 48 dieser Vertiefungen sowie an die Außenseiten 34 der Nasen 26 und an den Flanken der Nasen 26 und ferner axial nach oben in die axiale Ringvertiefung 22, um die Materialerhöhungen 30 sowie in die Hinterschneidungen 32 gedrängt. Ferner wird das Blechmaterial um die Verderehsicherungsrippen 43 herum geformt, so dass es an allen Flächen der Verdrehsicherungsrippen 43 anliegt, insbesondere auch an den seitlichen Flanken 47 der Verdrehsicherungsrippen 43, was der Verdrehsicherung zu Gute kommt. Mit anderen Wörtern wird ein Abdruck der Verdrehsicherungsrippen in dem umgeformten Blechteil gebildet. Die Verdrehsicherungsrippen 43 erfüllen aber auch eine andere Aufgabe. Durch die Verdrängung des Blechmaterials im Bereich der Verdrehsicherungsrippen 43, wird das Blechmaterial noch besser zum Fließen gebracht, so dass es die Hinterschneidungen 32 noch besser bzw. vollständig ausfüllt, was dem Auspresswiderstand zu Gute kommt.

Das fertige Zusammenbauteil gestaltet sich wie in der Fig. 2C gezeigt, und es ist zu erkennen, das die Unterseite des Blechteils 12 im Bereich des Lochrandes 60 am Gewindeauslauf 62 anliegt. Hierdurch und durch den Eingriff des Blechmaterials in den Hinterschneidungen 32 wird verhindert, dass das Bolzenelement 10 nach oben aus dem Blechteil 12 herausgedrückt werden kann.

Ferner soll darauf hingewiesen werden, dass die Anlage des Blechmaterials am Gewindeauslauf auch bei dünneren Blechen möglich ist, wenn die entsprechende Matrize ausgelegt ist, um das Blechmaterial im Bereich des Lochrandes 60' so zu formen, dass eine ausreichende Ausdehnung des Blechmaterials in diesem umgeformten Bereich erfolgt. Die radial nach innen und axial nach oben gerichtete Bewegung des Blechmaterials wird besonders zweckmäßig durch geneigte Flanken der Ringnase der Matrize bewerkstelligt, die sich in den schräg gestellten Seiten 64 und 66 der Ringvertiefung 58 abbilden.

Die Anbringung des gleichen Bolzenelements 10 in ein relativ dünnes Blechteil ist in den Fig. 3A bis 3C gezeigt. Wie in Fig. 3A zu sehen, ist das Stanzloch dort mit einem nach unten ragenden Ringkragen 66 versehen, was durch eine an sich bekannte Blechvorbereitung wie bei einem EBF-Bolzen erfolgen kann.

Die Darstellung gemäß Fig. 3B entspricht der der Fig. 2B, abgesehen von dem dünneren Blechteil und der Anwesenheit des Ringkragens 66, und muss daher nicht extra beschrieben werden. Stattdessen gilt die bisherige Beschreibung auch für diese Figur. Auf jeden Fall gilt für die gesamte Figurenbeschreibung stets das Konzept, das gleiche Bezugszeichen für gleiche Merkmale oder Merkmale mit der gleichen Funktion zu verwenden, es sei denn, etwas Gegenteiliges wird gesagt. Aus der Fig. 3C ist ersichtlich, dass die Verprägung des Blechteils mit der Ringnase der Matrize auch mit einem dünnen Blechteil dazu führt, dass das Blechmaterial voll in Eingriff mit dem Schaftteil 16 des Bolzenelements im Bereich der Nasen 26 und der radialen Vertiefungen 24 gelangt. Dabei hat die nicht gezeigte Matrize auch hier eine mittlere Öffnung, die den Schaftteil 16 des Bolzenelements aufnimmt und eine von ihrer planaren Stirnseite vorstehende Ringnase mit einer Formgebung komplementär zu der der eingeprägten Ringvertiefung 58 in der Unterseite des Blechteils 12, nur hat die Matrize hier eine Ringnase mit einer asymmetrischen Ausbildung, um die Form des Ringkragens zu berücksichtigen, und zwar so, dass die schräge Seite 64 der Ringvertiefung 58 länger ist als die schräge Seite 66. Durch die Einprägung der Ringvertiefung 58 wird auch hier das Blechmaterial im Randbereich 60 des Loches 50 vor allem im Bereich des Ringkragens 68 radial nach innen in die radialen Vertiefungen 24, zur Anlage an den Bodenflächen 48 dieser Vertiefungen sowie an die Außenseiten 34 der Nasen 26 und an den Flanken der Nasen 26 gebracht. Ferner wird das Blechmaterial axial nach oben in die axiale Ringvertiefung 22, um die Materialerhöhungen 30 sowie in die Hinterschneidungen 32 gedrängt.

Das fertige Zusammenbauteil gestaltet sich wie in der Fig. 3C gezeigt, und es ist auch hier zu erkennen, dass die Unterseite des Blechteils 12 im Bereich des Lochrandes 60 des durch die Nase der Matrize leicht umgeformten Ringkragens am Gewindeauslauf 62 anliegt bzw. unmittelbar oberhalb dieses steht. Hierdurch und durch den Eingriff des Blechmaterials in den Hinterschneidungen 32 wird verhindert, dass das Bolzenelement 10 nach oben aus dem Blechteil 12 herausgedrückt werden kann.

Ferner soll darauf hingewiesen werden, dass die Anlage des Blechmaterials am oder unmittelbar vor dem Gewindeauslauf auch bei noch dünneren Blechen möglich ist, wenn die entsprechende Matrize ausgelegt ist, um das Blechmaterial im Bereich des Lochrandes 60' bzw. des Ringkragens 68 so umzuformen, dass eine ausreichende Ausdehnung des Blechmaterials in die Höhe in diesem umgeformten Bereich erfolgt. Die radial nach innen und axial nach oben gerichtete Bewegung des Blechmaterials wird besonders zweckmäßig durch geneigte Flanken der Ringnase der Matrize bewerkstelligt, die sich in den schräg gestellten Seiten 64 und 66 der Ringvertiefung 58 abbilden.

Somit wird bei der Ausbildung des Schaftteils 16 mit einem Gewinde 17 das Blechmaterial - egal, ob in Form eines dünneren Blechteils oder eines dickeren Blechteils - bei einem einheitlichen Bolzenelement nur mittels leicht unterschiedlicher der jeweiligen Blechteildicke angepasster Matrizen so verformt, dass das Blechmaterial an dem Element in der erwünschten und oben beschriebene Weise anliegt. Konkret erfolgt die Umformung des Blechteils so, dass der dem Kopfteil 14 des Funktionselements abgewandte Bereich 60' des Blechmaterials dem dem Kopfteil zugewandten axialen Ende des Gewindes 17 gegenüberliegt und radial innerhalb des Außendurchmessers des Gewindes 17 liegt. Hierdurch wird, selbst bei einer geringfügigen Lockerung des Funktionselements im Blechteil, ein axialer Verlust des Elements verhindert, da das Blechmaterial gegen das Ende des Gewindes anstößt bzw. anstoßen wird.

Ein Beispiel für ein weibliches, d.h. hohles Einpresselement, ist in den Fig. 4A is 4D gezeigt. In den Zeichnungen gemäß den Fig. 4A bis 4D sowie 5A bis 5C und 6A bis 6C werden die gleichen Bezugszeichen verwendet wie für die bisherigen Figuren, und es gilt daher die bisherige Beschreibung sinngemäß auch für diese Figuren, weshalb hier nur auf wesentliche Unterschiede eingegangen wird.

Das Mutterelement 10' hat eine hohle mittlere Passage 70, die mit einem Innengewinde 72 versehen ist. Der Schaftteil 16 ist hier mit einem Durchmesser im Bereich des zylindrischen Abschnitts 74 seines freien Endes versehen, der dem Durchmesser des Schaftteils im Bereich der Bodenflächen 48 der radialen Vertiefungen 24 entspricht. Das Stirnende 76 des Elements ist mit einem kleinen Radius versehen, kann aber mit einer scharfen Kante an dieser Stelle versehen werden. Das Element kann selbststanzend in das Blechteil eingebracht werden. Anstatt der gezeigten Ausbildung kann der Schaftteil auf der dem Kopfteil abgewandten Seite der Nasen und Vertiefungen, d.h. im Bereich 74, mit einem Durchmesser ausgeführt werden, der größer ist als der Durchmesser des Schaftteils 16 im Bereich der Nasen 26. Dies, wie auch eine einigermaßen scharfe Stanzkante kann beispielsweise durch einen axialen Stauchvorgang am Schaftteil nach der Ausbildung der Nasen 26 und der radialen Vertiefungen 24 erreicht werden.

Das freie Stirnende 76 des Schafteils 16 kann somit, egal ob der Durchmesser größer ist als der Durchmesser des Schaftteils 16 im Bereich der Nasen 26 oder nicht, zum Durchstanzen des Blechteils ausgebildet werden, so dass das Mutterelement 10' beim Einsetzen in das Blechteil zusammen mit einer geeigneten Matrize das eigene Loch im Blechteil schneidet. D.h. das Mutterelement 10' wird selbststanzend ausgebildet.

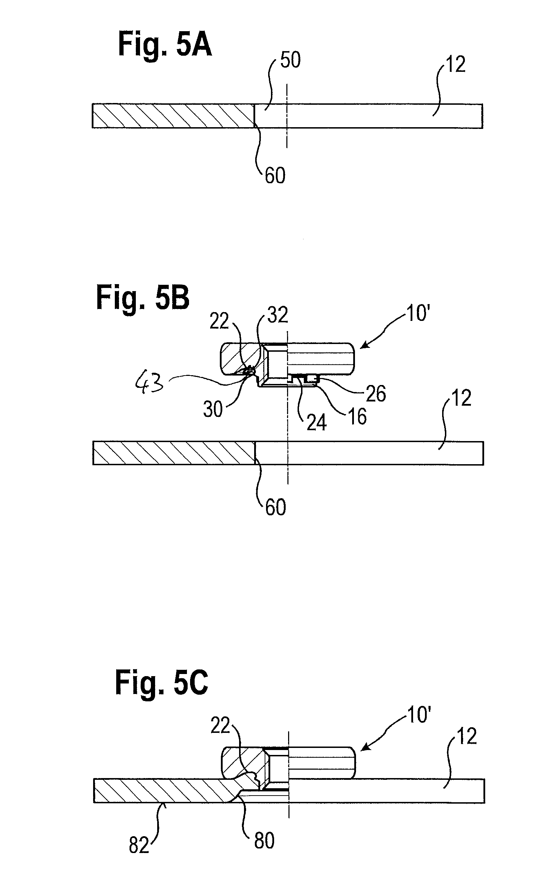

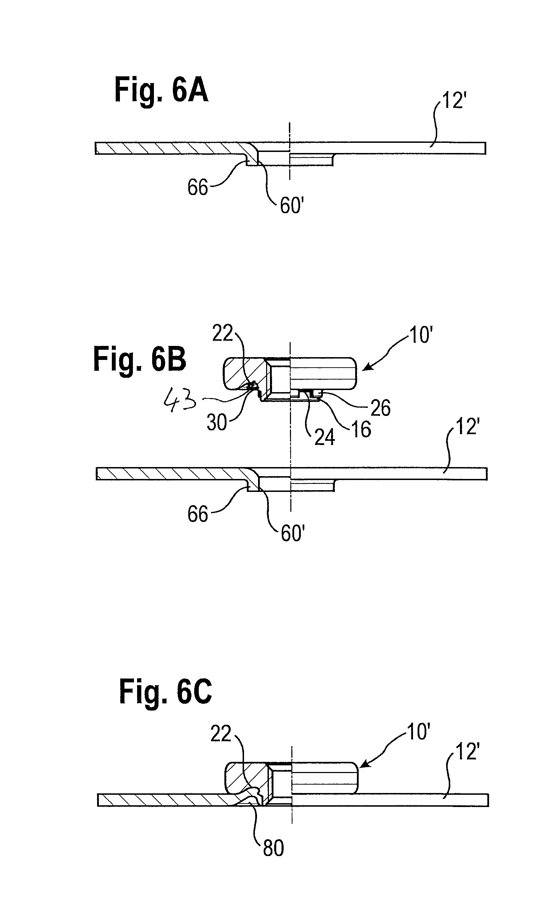

Bei der Anbringung des erfindungsgemäßen Funktionselements 10 wie in den Fig. 4A bis 4D gezeigt an ein Blechteil 12 bzw. 12' entsprechend den Fig. 5A bis 5C und 6A bis 6C entsteht ein Zusammenbauteil mit dem besonderen Kennzeichen, dass das Blechteil sich innerhalb der Ringvertiefung 22 in den radialen Vertiefungen 24 und in den Hinterschneidungen 32 erstreckt und hierdurch den erforderlichen Auspresswiderstand bzw. die erforderliche Verdrehsicherheit gewährleistet.

Wenn das Element so ausgelegt ist, dass der Abschnitt 74 im Durchmesser größer ist als der Schaftteil 16 im Bereich der Nasen, liegt die Stirnseite 76 des Elements innerhalb einer Vertiefung 80 des Blechteils axial vor der dem Kopfteil abgewandten Seite des Blechteils im Bereich außerhalb der Vertiefung 80. Die genaue Gestalt der Vertiefung 80 wird durch eine komplementäre Gestaltung der Ringnase der Matrize (nicht gezeigt) realisiert. Auf diese Weise liegt eine planare Anschraubfläche 82 für ein anzuschraubendes Bauteil (nicht gezeigt) vor, die der Unterseite des Blechteils 12, 12' entspricht. Man merkt, dass bei dünnen Blechteilen 12' die axiale Tiefe der Ringvertiefung 22 ausgenützt wird, um eine ausreichende Bauhöhe für die Anbindung an das Blechteil 12' zu schaffen.

Wird ein erweiterter Durchmesser des Schaftteils 16 im Abschnitt 74 vorgesehen, so wird ein zusätzlicher axialer Auspresswiderstand erreicht, da dort eine Schulter gebildet wird, ähnlich bzw. entsprechend dem Gewindeauslauf bei einem Bolzenelement. Hierdurch kann bei einem weiblichen Element eine ganz ähnliche Ausbildung der Anbindung des Blechteils am Element erreicht werden wie bei einem Bolzenelement.

Ein Verfahren zur Herstellung des erfindungsgemäßen Funktionselements in Form eines männlichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung im Kopfteil, die den Schaftteil auf der dem Schaftteil zugewandten Seite des Kopfteils umgibt, und von sich radial erstreckende Rippen 43 zumindest teilweise überquert wird, herstellt.

Ein Materialbund wird vorzugsweise um den Schaftteil im Bereich benachbart zum Kopfteil erzeugt, und zwar vorzugsweise mit einem Durchmesser, der dem der Nasen 26 im fertigen Element entspricht. Dieser Materialbund wird durch das Kaltschlagverfahren, bzw. durch ein weiteres Kaltschlagen des Materials des Schaftteils stellenweise verschoben, um die sich in axialer Richtung erstreckenden radialen Vertiefungen 24 und die Hinterschneidungen 32 bildenden Materialerhöhungen 30 an den dem Kopfteil 14 zugewandten Enden der radialen Vertiefungen 24 sowie die zwischen den radialen Vertiefungen verbleibenden Nasen 26 auszubilden. Anschließend wird das Gewinde 17 auf dem Schaftteil kurz vor oder unmittelbar vor den dem Kopfteil abgewandten axialen Enden der radialen Vertiefungen durch einen Walzvorgang ausgebildet. Hierdurch wächst der Durchmesser des Schaftteils so, dass der Außendurchmesser des Gewindes größer wird als der der Nasen 26.

Ein Verfahren zur Herstellung eines Funktionselements in Form eines weiblichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung im Kopfteil, die den Schaftteil auf der dem Schaftteil zugewandten Seite umgibt und von sich radial erstreckende Rippen 43 zumindest teilweise überquert wird, herstellt. Auch hier wird das Element vorzugsweise mit einem Materialbund um den Schaftteil im Bereich benachbart zum Kopfteil erzeugt. Durch das Kaltschlagverfahren bzw. durch ein weiteres Kaltschlagen wird das Material des Schaftteils bzw. (falls vorgesehen) des Bundes stellenweise verschoben, um die sich in axialer Richtung erstreckenden radialen Vertiefungen und die Hinterschneidungen bildenden Materialerhöhungen an den dem Kopfteil zugewandten Enden der radialen Vertiefungen sowie zwischen den radialen Vertiefung angeordneten Nasen auszubilden. Es wird ferner eine sich axial erstreckende mittlere Passage in dem Schaftteil und in dem Kopfteil ausgebildet. Diese kann bereits am Anfang des Kaltschlagverfahrens während der Ausbildung des Schaftteils erfolgen.

Bei allen Ausführungsformen können als Beispiel für den Werkstoff der Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie beispielsweise AM50 in Frage.

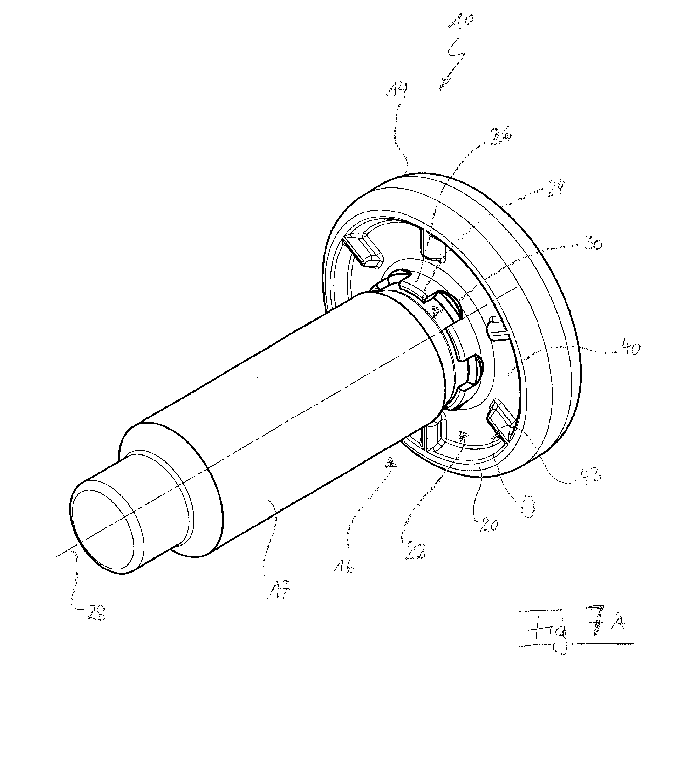

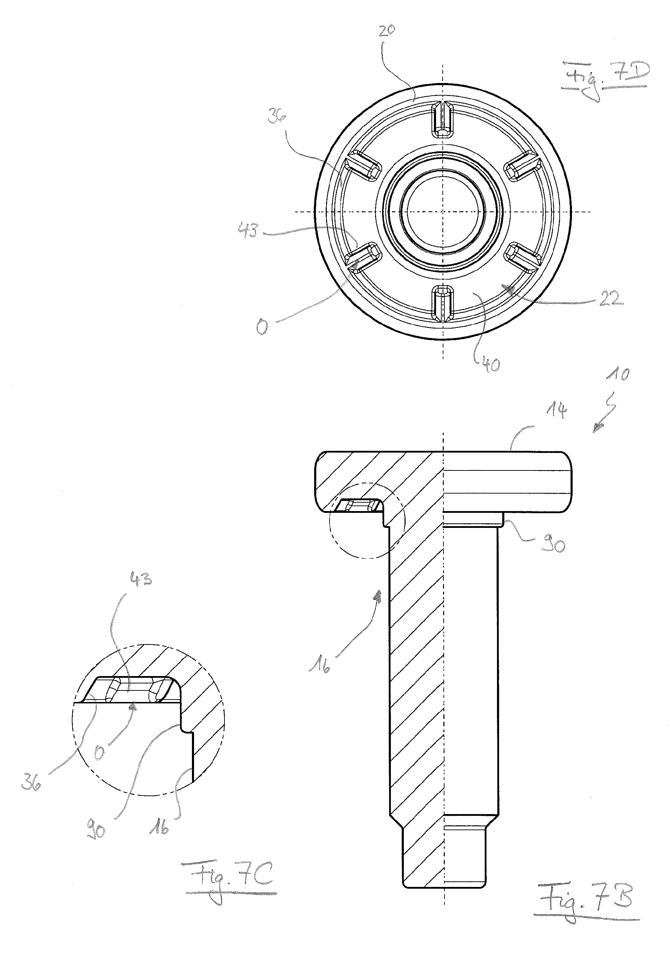

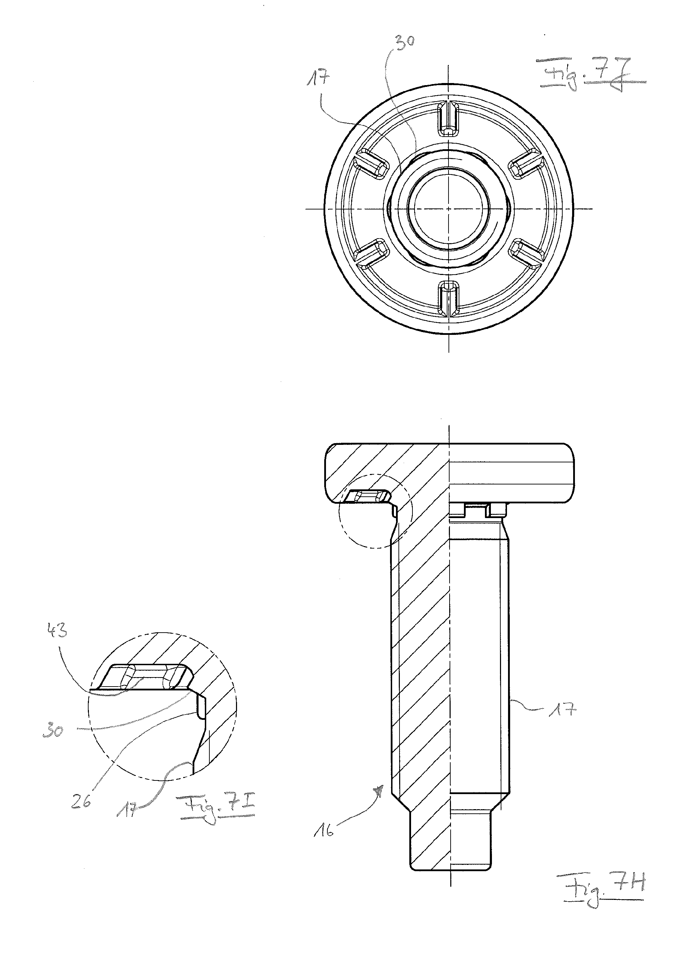

In Figur 7A ist eine Ausführungsform des Funktionselements 10 gezeigt, die in vielen Aspekten der in Figur 1 gezeigten Ausführungsform gleicht, weshalb auch auf die gleichen Bezugszeichen zurückgegriffen wird. Es ist jedoch ersichtlich, dass insbesondere in der Ausgestaltung der Blechanlagefläche 20 und der Ringvertiefung 22 Unterschiede bestehen. Auch die Verdrehsicherungsrippen 43 sind anders ausgebildet als in der in Figur 1A gezeigten Ausführungsform.

Die Blechanlagefläche 20 des Funktionselements 10 der Fig. 7A bildet einen vergleichsweise schmalen Ring. Zudem ist die axiale Ringvertiefung 22 breiter ausgeführt und weist einen im Wesentlichen ebenen Bodenbereich 40 auf. Die Verdrehsicherungsrippen 43 erstrecken sich ausgehend von dem radial außenseitigen Rand der Ringvertiefung 22 - letztlich die seitliche Flanke 36 - in radialer Richtung nach innen. Sie durchqueren jedoch die Ringvertiefung 22 nicht vollständig, so dass sie nicht mit dem Schaftteil 16 in Kontakt stehen. Angrenzend an die Vertiefungen 24, die Nasen 26 und die Materialerhöhungen 30 an dem dem Kopfteil 14 zugewandten Ende des Schaftteils 16 ist die Ringvertiefung 22 in Umfangsrichtung nicht unterbrochen, was in vielen Fällen zu einer Verbesserung der Fixierung des Bolzenelements 10 an einem Blechteil führt, ohne dass die Zuverlässigkeit der Verdrehsicherung beeinträchtigt wird.

Eine jeweilige freie Oberkante O der Verdrehsicherungsrippen 43 liegt in einer durch die Blechanlagefläche 20 definierten Ebene. Anstelle eines vergleichsweise steilen radial innenseitigen Abfalls der Verdrehsicherungsrippen 43 kann vorgesehen sein, diese allmählich zu dem Bodenbereich 40 auslaufen zu lassen, beispielsweise mit einem linearen oder gekrümmten Verlauf.

Figur 7B zeigt eine teilweise in Längsrichtung geschnittene Seitenansicht des in Figur 7A gezeigten Bolzelements 10 in einem Zwischenzustand des Herstellungsverfahrens des Bolzenelements 10. In einem Übergangsbereich von dem Schaftteil 16 zu dem Kopfteil 14 ist ein Materialbund 90 zu erkennen, aus dem - wie nachfolgend noch eingehend erläutert wird - später die Vertiefungen 24 und die Materialerhöhungen 30 erzeugt werden. Außerdem ist der Schaftteil 16 noch nicht mit dem Gewinde 17 versehen.

Figur 7C zeigt diesen Bereich in vergrößerter Form, wodurch auch der vergleichsweise steile Abfall der Verdrehsicherungsrippen 43 an deren radial innenseitigen Ende zu erkennen ist. Zudem ist die seitliche Flanke 36 der Ringvertiefung 22 steiler als bei den vorstehend diskutierten Ausführungsformen und weist einen linearen Verlauf aus. Der Bodenbereich 40 ist im Wesentlichen eben.

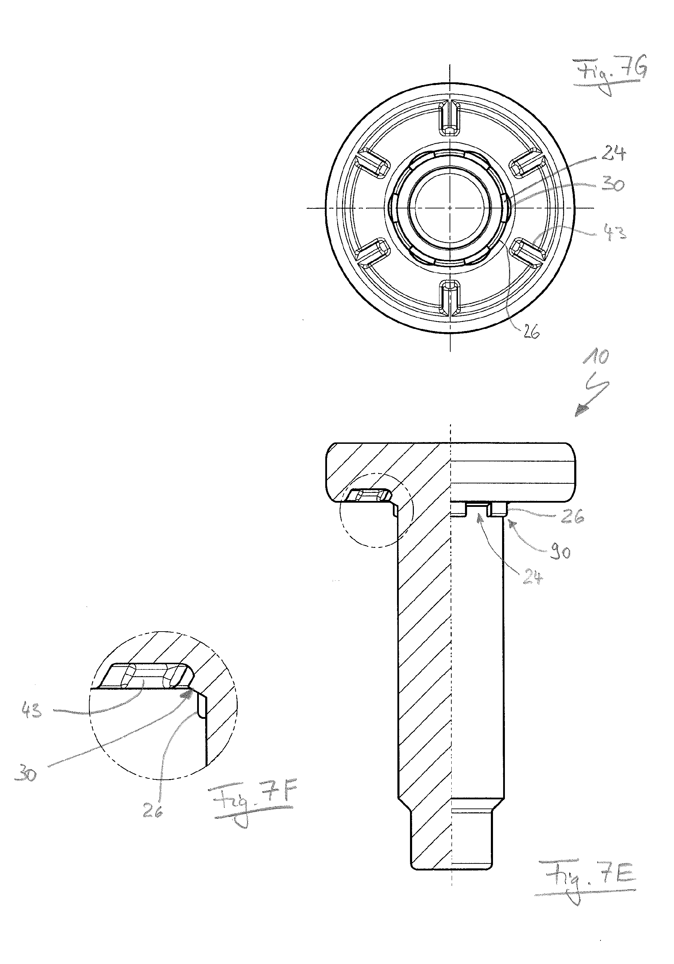

Figur 7E zeigt das Bolzenelement 10 nach einem weiteren Schritt des Herstellungsverfahrens. Durch Kaltschlagen wurde das Material des Materialbunds 90 abschnittsweise in axialer Richtung verschoben, so dass die Vertiefungen 24 und die in Figur 7F deutlicher zu erkennenden Materialerhöhungen 30 entstanden sind, die die bei der Fixierung des Bolzenelements 10 an einem Blechteil, in axialer Richtung wirkenden Hinterschneidungen 32 bereitstellen. Die Vertiefungen 24 und die ihnen zugeordneten Materialerhöhungen 30 sind auch in der axialen Ansicht des Bolzenelements 10 in Figur 7G gut zu erkennen. In diesem Zusammenhang wird nochmals darauf hingewiesen, dass es nicht zwingend erforderlich ist, dass die Verdrehsicherungsrippen 43 in Umfangsrichtung gegenüberliegend den Nasen 26 ausgerichtet sind. Grundsätzlich ist jede beliebige relative Winkelstellung der genannten Elemente 43, 26 möglich. Außerdem kann es vorgesehen sein, dass eine unterschiedliche Anzahl von Verdrehsicherungsrippen 43 und Nasen 26 vorgesehen ist. Abweichend von der symmetrischen Ausgestaltung und Verteilung der Elemente 24, 26, 30, 43 kann auch eine asymmetrische Ausgestaltung und/oder Verteilung gewählt werden. Beispielsweise können unterschiedliche breit ausgeführte Vertiefungen 24, Nasen 26, Materialerhöhungen 30 und/oder Verdrehsicherungsrippen 43 vorgesehen sein. Analoges gilt für sämtliche Ausführungsformen des erfindungsgemäßen Funktionselements.

Figur 7H zeigt das Bolzenelement 10 in einem im Wesentlichen fertigen Zustand nach Abschluss des Herstellungsverfahrens. Der Schaftteil 16 wurde abschnittsweise mit einem Gewinde 17 versehen, wodurch dieser Abschnitt in radialer Richtung weiter ausgreift. Dies führt dazu, dass die in Figur 7G noch gut zu erkennenden Nasen 26 und Vertiefungen 24 in Figur 7J verdeckt sind. Lediglich die Materialerhöhungen 30 sind noch zu erkennen.

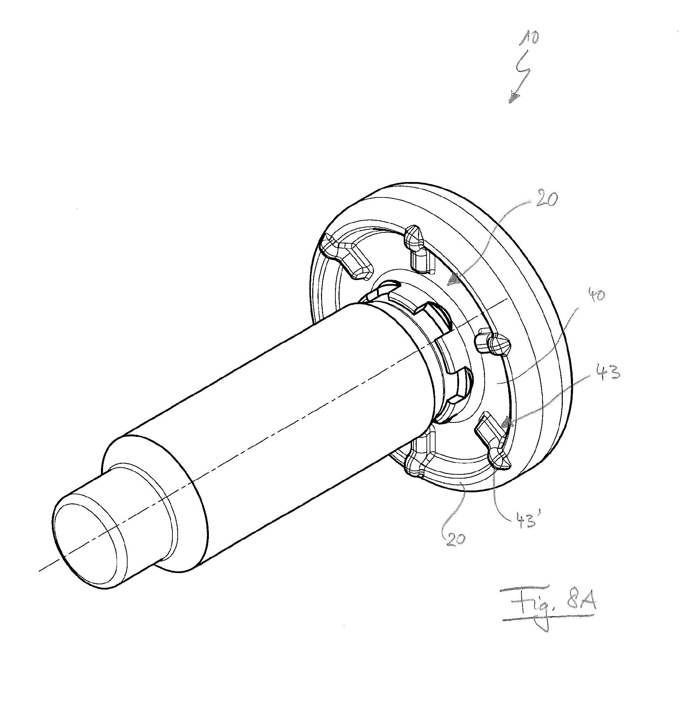

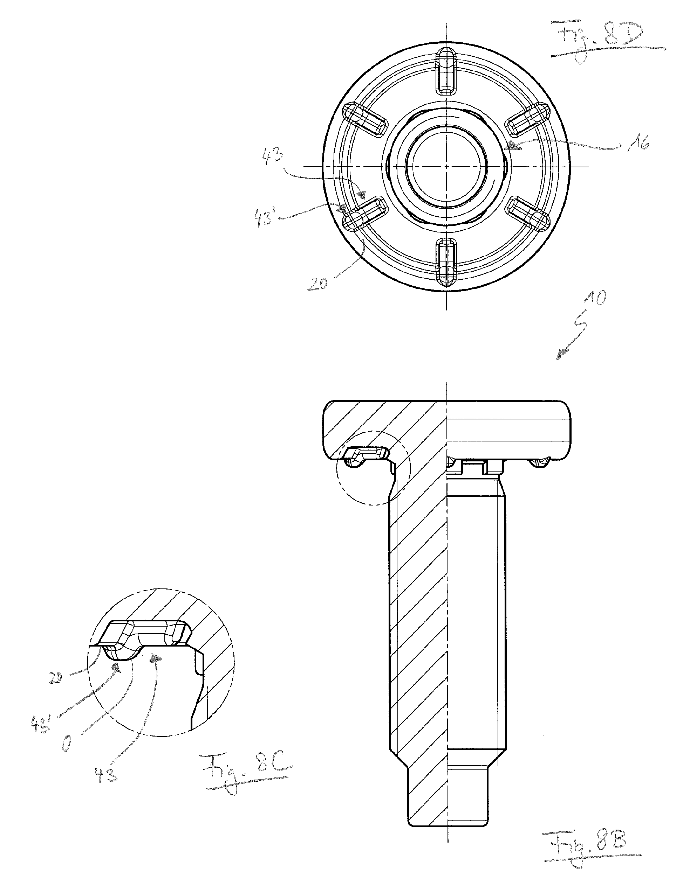

Figur 8A zeigt eine weitere Ausführungsform des Bolzenelements 10, das dem der Figur 7A weitgehend ähnelt. Allerdings erstrecken sich die Verdrehsicherungsrippen 43 nun teilweise auch auf die Blechanlagefläche 20 und darüber hinaus. Mit anderen Worten übergreift jeweils ein Verdrehsicherungsabschnitt 43' der Verdrehsicherungsrippen 43 die Blechanlagefläche 20 und steht in axialer Richtung von dieser ab. Es ist zu erkennen, dass die Erstreckung der Verdrehsicherungsabschnitte 43' in axialer Richtung ausgehend von der Blechanlagefläche 20 etwas geringer ist als die der Verdrehsicherungsrippen 43 von dem Bodenbereich 40 der Ringvertiefung 22. Es ist aber auch durchaus vorstellbar, die axiale Erstreckung der oder einiger der Verdrehsicherungsabschnitte 43' gleich groß oder größer zu wählen. Die Oberkante O der Verdrehsicherungsrippen 43 liegt somit zumindest im Bereich der Verdrehsicherungsabschnitte 43' nicht in der Ebene der Blechanlagefläche 20, während dies bei den im Bereich der Ringvertiefung 22 liegenden Segmenten der Verdrehsicherungsrippen 43 der Fall ist. Der Verlauf der Oberkante O zwischen den Verdrehsicherungsabschnitten 43' und den genannten Segmenten ist verrundet, um scharfe Kanten zu vermieden.

Die Figuren 8B bis 8D zeigen das Bolzenelement 10 der Figur 8A in analoger Weise wie die Figuren 1B bis 1D das Bolzenelement 10 der Figur 1A wiedergeben, um den die Blechanlagefläche 20 übergreifenden Verlauf der Verdrehsicherungsrippen 43 deutlich werden zu lassen. Insbesondere in Fig. 8D ist der nicht durch die Rippen 43 unterbrochene Ringbereich der Ringvertiefung 22 um den Schaftteil 16 zu erkennen.

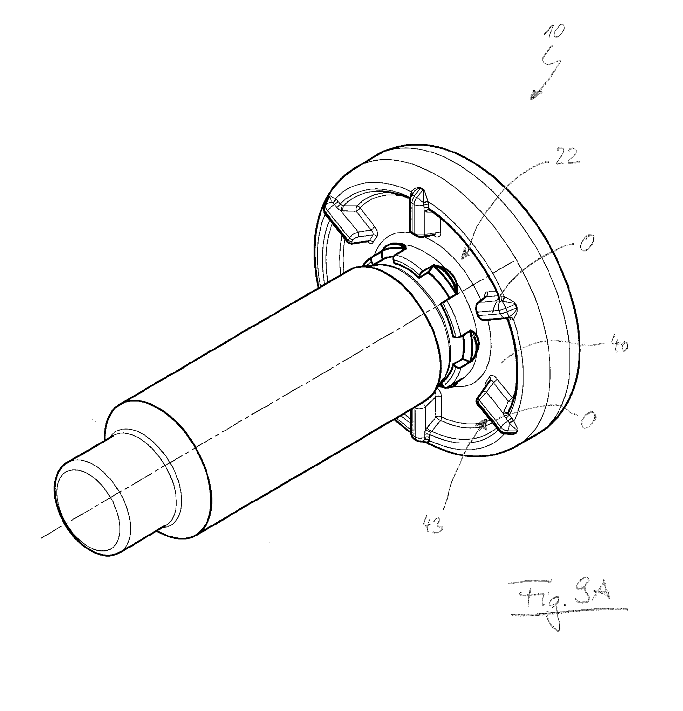

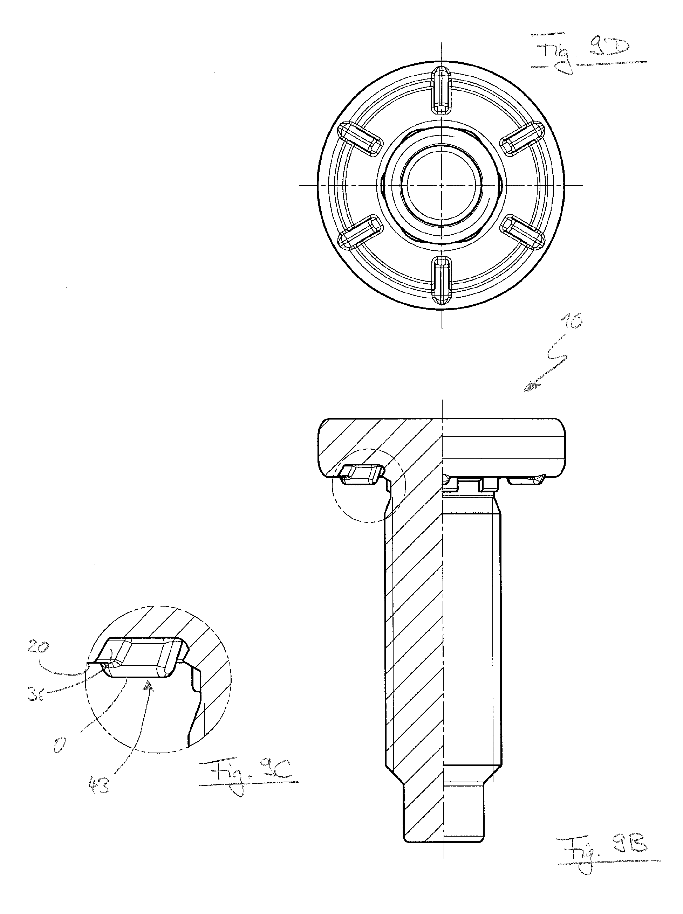

Figur 9A zeigt eine weitere Ausführungsform des Bolzenelements 10. Zwar weisen die Verdrehsicherungsrippen 43 wie bei der in Figur 8A gezeigten Ausführungsform einen die Blechanlagefläche 20 in radialer Richtung übergreifenden Verlauf aus, allerdings liegen die jeweiligen Oberkanten O der Verdrehsicherungsrippen 43 bis zu einem in radialer Richtung mittleren Bereich der Blechanlagefläche 20 in einer Ebene, die parallel versetzt zu der durch die Blechanlagefläche 20 aufgespannten Ebene angeordnet ist. Ausgehend von diesem Bereich laufen die Verdrehsicherungsrippen 43 in radialer Richtung nach außen aus. Es versteht sich, dass der auslaufende Verlauf der Verdrehsicherungsrippen 43 beliebig an die jeweils vorliegenden Erfordernisse angepasst werden kann. Gleiches gilt für den radial innenseitigen Abfall der Verdrehsicherungsrippen 43 von der Oberkante O hin zu dem Bodenbereich 40. Dieser Abfall definiert den radial außenseitigen Rand des nicht durch die Rippen 43 unterbrochenen Ringbereichs der Ringvertiefung 22 um den Schaftteil 16.

Die Figuren 9B bis 9D zeigen ergänzend weitere Ansichten des in Figur 9A gezeigten Bolzenelements 10.

Abweichend von den in den Figuren 7A bis 9D gezeigten Verhältnissen kann die radiale Erstreckung der Verdrehsicherungsrippen 43 zu dem Schaftteil 16 hin frei gewählt werden. Mit anderen Worten kann die Breite des nicht durch die Verdrehsicherungsrippen 43 unterbrochenen Ringbereichs der Vertiefung 22 um den Schaftteil 16 frei gewählt werden, um dem Bolzenelement 10 die gewünschte Eigenschaften zu verleihen. Grundsätzlich ist es auch möglich, die Verdrehsicherungsrippen 43 ausgehend von dem Schaftteil 16 in radialer Richtung - oder auch schräg dazu - nach außen verlaufen zu lassen und einen nicht durch die Verdrehsicherungsrippen 43 unterbrochenen Ringbereich vorzusehen, der zwischen den radial außenseitigen Enden der Verdrehsicherungsrippen 43 und der radial außenliegenden schrägen Flanke 36 der Vertiefung 22 angeordnet ist. Es ist auch denkbar, die Verdrehsicherungsrippen 43 weder mit dem Schaftteil 16 noch mit der Flanke 36 zu verbinden, so dass zwei - insbesondere koaxiale - unterbrechungsfreie Ringbereiche der Vertiefung 22 gebildet werden.

Ergänzend sei hinzugefügt, dass nicht alle Verdrehsicherungsrippen 43 zwangsweise die gleiche Ausgestaltung - d.h. z.B. die gleiche axiale, radiale Erstreckung und/oder Breite und/oder Ausgestaltung der Flanken der Rippen 43 - aufweisen müssen. Denn in bestimmten Fällen kann es vorteilhaft sein, die Verdrehsicherungsrippen 43 unterschiedliche lang, breit und/oder hoch auszugestalten und/oder diese - insbesondere alternierend - mit dem Schaftteil 16 oder der Flanke 36 zu verbinden. Demgemäß sind Ausführungsformen denkbar, bei denen zwar keine der Verdrehsicherungsrippen 43 die Vertiefung 22 in radialer Richtung vollständig quert, trotzdem jedoch kein nicht unterbrochener Ringbereich vorliegt.

Einer Kombination der vorstehend beschriebenen unterschiedlichen Ausführungsformen der Verdrehsicherungsrippen 43 an einem Bolzenelement 10 ist ebenfalls möglich.

Der Vollständigkeit halber sei darauf hingewiesen, dass die vorstehenden Ausführungen zu unterschiedlichen Ausgestaltungen des Bolzenelements 10 in analoger Form auf ein entsprechendes Mutterelement zutreffen.

### Bezugszeichenliste

| | |
|---|---|
| 10, 10' | Bolzenelement, Mutterelement |
| 12, 12' | Blechteil |
| 14 | Kopfteil |
| 16 | Schaftteil |
| 17 | Gewinde |
| 18 | Unterseite des Kopfteils |
| 20 | Blechanlagefläche |
| 22 | axiale Vertiefung |
| 24 | radiale Vertiefung |
| 26 | Nasen |
| 28 | mittlere Längsachse |
| 30 | Materialerhöhung |
| 32 | Hinterschneidung |
| 34 | radial äußere Seite der Nasen |
| 36 | seitliche Flanke |
| 38 | Übergang |
| 40 | Bodenbereich der Ringnut |
| 42 | Rundung |
| 43 | Verdrehsicherungsrippen |
| 43' | Verdrehsicherungsabschnitt |
| 44 | Radius |
| 45 | Wurzel der Verdrehsicherungsrippen an Schaftteil 16 bzw. an den Nasen 26 |
| 46 | radiale Fläche |
| 47 | seitliche Flanken der Verdrehsicherungsrippen 43 |
| 48 | Bodenfläche |
| 50 | Stanzloch |
| 52 | Stirnende |
| 54 | Oberseite des Blechteils |
| 56 | Unterseite des Blechteils |
| 58 | Ringvertiefung im Blechteil |
| 58' | Ringvertiefung im Blechteil |
| 60 | Randbereich des Stanzlochs |
| 60' | umgeformter Randbereich des Stanzlochs |
| 62 | Gewindeauslauf |
| 64 | Seite der Ringvertiefung 58 |
| 66 | Seite der Ringvertiefung 58 |
| 68 | Ringkragen |
| 70 | mittlere Passage |
| 72 | Innengewinde |
| 74 | zylindrischer Abschnitt |
| 76 | Stirnende des Mutterelements |
| 80 | Vertiefung des Blechteils |
| 82 | planare Anschraubfläche |
| 90 | Materialbund |
| O | Oberkante |

## Patentansprüche

1. Funktionselement in Form eines Einpresselements zur Befestigung an ein Blechteil (12;12'), wobei das Funktionselement einen Kopfteil (14) und einen Schaftteil (16) aufweist, der Kopfteil auf der dem Schaftteil zugewandten Seite (18) eine ringförmige Blechanlagefläche (20) und innerhalb dieser ringförmigen Blechanlagefläche eine ringförmige axiale Vertiefung (22) aufweist, die am Übergang des Kopfteils (14) in den Schaftteil (16) diesen umgibt,
wobei der Schaftteil (16) mehrere umfangsmäßig verteilte, sich in axialer Richtung erstreckende radiale Vertiefungen (24) und dazwischen sich ebenfalls axial erstreckende und radial hervorstehende Nasen (26) aufweist, wobei ferner Materialerhöhungen (30) vorgesehen sind, die im Bereich der ringförmigen Vertiefung (22) mit dem Kopfteil Hinterschneidungen (32) bilden, die vorzugsweise an den Stellen der radialen Vertiefungen (24), an deren dem Kopfteil zugewandten axialen Enden vorliegen und sich radial erstreckende Verdrehsicherungsrippen (43) oder anderweitige Verdrehsicherungsmerkmale im Bodenbereich der ringförmigen Vertiefung (22) vorgesehen sind.

2. Funktionselement nach Anspruch 1,
**dadurch gekennzeichnet,**
**dass** die Verdrehsicherungsrippen (43) oder die Verdrehsicherungsmerkmale an Stellen angeordnet sind, die im Vergleich zu den Stellen der radialen Vertiefungen (24) um die mittlere Längsachse (28) des Funktionselements winkelmäßig versetzt und insbesondere jeweils in der Mitte zwischen zwei einander folgenden radialen Vertiefungen (24) angeordnet sind.

3. Funktionselement nach Anspruch 1 oder Anspruch 2,
**dadurch gekennzeichnet,**
**dass** die Hinterschneidungen (32) sich axial innerhalb der ringförmigen axialen Vertiefung (22) befinden.

4. Funktionselement nach einem der Ansprüche 1 bis 3,
**dadurch gekennzeichnet,**
**dass** zumindest eine der sich radial erstreckenden Verdrehsicherungsrippen (43) eine freie Oberkante (O) aufweist, die zumindest abschnittsweise, insbesondere im Wesentlichen vollständig in einer Ebene liegt, die durch die ringförmige Blechanlagefläche (20) definiert ist.

5. Funktionselement nach einem der Ansprüche 1 bis 4,
**dadurch gekennzeichnet,**
**dass** auf der ringförmigen Blechanlagefläche (20) zumindest ein Verdrehsicherungsabschnitt (43') angeordnet ist, der insbesondere in radialer Richtung mit einer der Verdrehsicherungsrippen (43) fluchtet und/oder in eine der Verdrehsicherungsrippen (43) übergeht.

6. Funktionselement nach einem der Ansprüche 1 bis 5,
**dadurch gekennzeichnet,**
**dass** zumindest eine der sich radial erstreckenden Verdrehsicherungsrippen (43) in radialer Richtung eine Erstreckung aufweist, die kleiner ist als die in radialer Richtung definierte Breite (B) der ringförmigen Vertiefung (22).

7. Funktionselement nach einem der vorhergehenden Ansprüche,
**dadurch gekennzeichnet,**
**dass** es sich um ein an seinem Schaftteil (16) ein Gewinde (18) aufweisendes Bolzenelement (10) handelt, wobei der Außendurchmesser des Gewindes (17) einen Radius aufweist, der größer ist als die (maximale) radiale Abmessung von der Längsachse (28) des Schaftteils (26) zu der Bodenfläche der radialen Vertiefungen (24) oder zu der radial äußeren Fläche der radial vorstehenden Nasen (26).

8. Funktionselement nach Anspruch 7,
**dadurch gekennzeichnet,**
**dass** die die Hinterschneidungen (32) bildenden Materialerhöhungen (30) eine von der mittleren Längsachse (28) des Funktionselements gemessene maximale radiale Abmessung aufweisen, die der radialen Abmessung des Gewindes (17) zumindest im Wesentlichen entspricht.

9. Funktionselement nach einem der vorhergehenden Ansprüche,
**dadurch gekennzeichnet,**
**dass** das Gewinde (17) an seinem dem Kopfteil (14) zugewandten Ende unmittelbar vor den dem Kopfteil (14) abgewandten Enden der radialen Vertiefungen (24) bzw. der Nasen (26) angeordnet ist.

10. Funktionselement nach einem der vorhergehenden Ansprüche,
**dadurch gekennzeichnet,**
**dass** es sich bei dem Funktionselement um ein hohles Element (10') handelt, dessen hohle mittlere Passage (70) mit einem Gewinde (72) versehen ist oder versehbar ist.

11. Zusammenbauteil bestehend aus einem Funktionselement (10; 10') nach einem der vorhergehenden Ansprüche in Kombination mit einem Blechteil (12; 12'),
**dadurch gekennzeichnet,**
**dass** sich das Blechteil (12; 12') innerhalb der ringförmigen Vertiefung (22) um die sich radial erstreckende Rippen (43) herum und in die Hinterschneidungen (32) hinein erstreckt und hierdurch den erforderlichen Auspresswiderstand bzw. die erforderliche Verdrehsicherheit gewährleistet, insbesondere wobei das Blechmaterial zwischen den Materialerhöhungen (30) an der Oberfläche des Elements (10; 10') anliegt.

12. Zusammenbauteil nach Anspruch 11,
**dadurch gekennzeichnet,**
**dass** die dem Kopfteil (14) abgewandte Seite des Blechteils (12; 12') im Bereich benachbart zum Schaftteil (16) bei einem Bolzenelement unmittelbar vor dem dem Kopfteil (14) zugewandten Ende des Gewindes (17) und bei einem hohlen Element (10')vor dem freien Stirnende (76) des hohlen Schaftteils angeordnet ist.

13. Zusammenbauteil nach Anspruch 11,
**dadurch gekennzeichnet,**
**dass** das Blechteil (12; 12') auf der dem Kopfteil abgewandten Seite einen Ringkragen (68) aufweist, dessen radial innere Fläche eng an den Nasen (26) bzw. den Bodenflächen der radialen Vertiefungen (24) anliegt, insbesondere wobei das dem Kopfteil (14) abgewandte axiale Ende des Ringkragens (68) benachbart zum Schaftteil (16) bei einem Bolzenelement (10) unmittelbar vor dem dem Kopfteil (14) zugewandten Ende des Gewindes (17) und bei einem hohlen Element unmittelbar vor dem freien Stirnende (76) des hohlen Schaftteils angeordnet ist.

14. Verfahren zur Herstellung eines Funktionselements (10) in Form eines Funktionselements (10; 10') nach einem der vorhergehenden Ansprüche 1 bis 10,
**dadurch gekennzeichnet,**
**dass** man von einem zylindrischen Metallstab oder Draht ausgeht, und in einem Kaltschlagverfahren einen Rohling mit einem Kopfteil (14), mit einem Schaftteil (16) sowie mit einer ringförmigen axialen Vertiefung (22), die den Schaftteil (16) auf der dem Schaftteil (16) zugewandten Seite des Kopfteils (14) umgibt und von sich radial erstreckende Rippen (43) zumindest teilweise überquert wird und vorzugsweise mit einem Materialbund um den Schaftteil im Bereich benachbart zum Kopfteil (14) ausbildet, dass durch das Kaltschlagverfahren das Material des Schaftteils (16) bzw. (falls vorgesehen) des Bundes stellenweise verschoben wird, um die sich in axialer Richtung erstreckenden radialen Vertiefungen (24) und die Hinterschneidungen (32) bildende Materialerhöhungen (30) an den dem Kopfteil (14) zugewandten Enden der radialen Vertiefungen (24) sowie zwischen den radialen Vertiefungen (24) angeordneten Nasen (26) auszubilden, wobei anschließend entweder ein Gewinde (17) auf dem Schaftteil (16) kurz vor oder unmittelbar vor den dem Kopfteil (14) abgewandten axialen Enden der radialen Vertiefungen (24) ausgebildet wird oder eine sich axial erstreckende mittlere Passage (70) im Schaftteil (16) und im Kopfteil (14) ausgebildet wird.

15. Verfahren nach Anspruch 14,
**dadurch gekennzeichnet,**
**dass** das freie Stirnende (76) des Mutterelements (10')gestaucht wird, um den Radius des Stirnendes (76) von der Längsachse (28) zu erhöhen, damit dieser größer ist als der des Schaftteils (16) im Bereich der radialen Vertiefungen (24) und vorzugsweise der des Schaftteils im Bereich der Nasen (26) und gegebenenfalls, um eine Stanzkante am freien Ende des Schaftteils (16 ) auszubilden.
